(19) Europäisches Patentamt
European Patent Office
Office européen des brevets

(11) **EP 4 589 853 A1**

(12) **EUROPEAN PATENT APPLICATION**
published in accordance with Art. 153(4) EPC

(43) Date of publication:
**23.07.2025 Bulletin 2025/30**

(21) Application number: **23870490.2**

(22) Date of filing: **19.09.2023**

(51) International Patent Classification (IPC):
**H04B 7/00** (2006.01)  **H04W 24/00** (2009.01)

(52) Cooperative Patent Classification (CPC):
**H04B 7/00; H04B 7/06; H04W 24/00; H04W 24/10**

(86) International application number:
**PCT/CN2023/119794**

(87) International publication number:
**WO 2024/067258 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211214373**

(71) Applicant: **Huawei Technologies Co., Ltd.
Shenzhen, Guangdong 518129 (CN)**

(72) Inventors:
 • **CHAI, Xiaomeng
  Shenzhen, Guangdong 518129 (CN)**
 • **TIAN, Yang
  Shenzhen, Guangdong 518129 (CN)**
 • **LI, Yuan
  Shenzhen, Guangdong 518129 (CN)**
 • **JIN, Yu
  Shenzhen, Guangdong 518129 (CN)**
 • **SUN, Yan
  Shenzhen, Guangdong 518129 (CN)**
 • **PANG, Jiyong
  Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57)    Embodiments of this application provide a communication method and a communication apparatus. The method includes: A terminal device determines a first parameter value of a first parameter based on a measurement result of a first downlink reference signal and a first precoder, where the first parameter reflects downlink channel quality; and obtains a parameter value of a second parameter based on a first compensation amount and the first parameter value of the first parameter, and reports the parameter value of the second parameter, where the first compensation amount indicates a difference between downlink channel quality in a case in which a network device uses the first precoder and downlink channel quality in a case in which the network device uses a second precoder. **In** the solutions in embodiments of this application, the parameter value reported by the terminal device can accurately reflect actual downlink channel quality.

700

FIG. 7

EP 4 589 853 A1

## Description

This application claims priority to Chinese Patent Application No. 202211214373.X, filed with the China National Intellectual Property Administration on September 30, 2022 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a communication system, a network device needs to determine related configuration information of a downlink channel based on a downlink channel state information (channel state information, CSI) parameter. A terminal device calculates a downlink CSI parameter by measuring a downlink reference signal, and feeds back the downlink CSI parameter to the network device.

A channel quality indicator (channel quality indicator, CQI) in the CSI parameter is used as an example. When calculating the CQI, the terminal device needs to consider a precoder used by the network device. In some scenarios, for example, in an artificial intelligence (artificial intelligence, AI)-based CSI feedback scenario, the terminal device may generate CSI feedback information based on original CSI by using a CSI generator, and report the CSI feedback information to the network device. The network device processes the CSI feedback information by using a CSI reconfigurator to generate recovery CSI, and sends a downlink transmission by using a precoder corresponding to the recovery CSI. However, deploying, on the terminal device, a CSI reconfigurator having same or similar performance as the network device side to obtain the precoder used by the network device can increase complexity and performance requirements of the terminal device. Therefore, a solution that enables a parameter value reported by the terminal device to accurately reflect actual downlink channel quality is urgently needed. Further, in this solution, the terminal device may not use a CSI reconfigurator having same or similar performance as the network device side.

## SUMMARY

Embodiments of this application provide a communication method and a communication apparatus, to enable a parameter value reported by a terminal device to accurately reflect actual downlink channel quality.

According to a first aspect, a communication method is provided. The method may be performed by a terminal device, or may be performed by a chip or a circuit configured in a terminal device. This is not limited in this application.

The method includes: receiving a first downlink reference signal from a network device; determining a first parameter value of a first parameter based on a measurement result of the first downlink reference signal and a first precoder, where the first parameter reflects downlink channel quality; compensating for the first parameter value of the first parameter based on a first compensation amount to obtain a parameter value of a second parameter, where the first compensation amount indicates a difference between downlink channel quality in a case in which the network device uses the first precoder and downlink channel quality in a case in which the network device uses a second precoder, and the second parameter and the first parameter are a same parameter, or the second parameter is another parameter that is different from the first parameter and that reflects the downlink channel quality; and sending first indication information to the network device, where the first indication information indicates the parameter value of the second parameter and feedback information for first channel information, the feedback information for the first channel information is based on the measurement result of the first downlink reference signal, and the feedback information for the first channel information corresponds to the second precoder.

According to the solution in this embodiment of this application, the first compensation amount may indicate a difference between downlink channel quality determined based on the first precoder and downlink channel quality determined based on the second precoder. The terminal device determines the first parameter value of the first parameter based on the first precoder, and compensates for the first parameter value of the first parameter based on the first compensation amount, so that a parameter value obtained through compensation can accurately reflect the downlink channel quality in the case in which the network device uses the second precoder. This helps improve accuracy of a subsequent related configuration of the network device. In other words, in the solution in this embodiment of this application, even if the terminal device cannot learn of a precoder corresponding to the feedback information for the first channel information, that is, the second precoder, compensation is performed to enable a parameter value fed back by the terminal device to accurately reflect downlink channel quality in a case in which the network device uses a precoder corresponding to the feedback information for the first channel information.

The first precoder is a precoder used by the terminal device to calculate the first parameter value of the first parameter, in other words, a precoder assumed by the terminal device when the terminal device calculates the parameter value #1 of the first parameter.

For example, the first channel information may be a channel eigenvector.

Alternatively, the first channel information may be a channel response.

For example, the first precoder may be a precoder corresponding to the first channel information. The first precoder may be a channel eigenvector corresponding to the first channel information.

That the feedback information for the first channel information corresponds to the second precoder means that the second precoder may be obtained based on the feedback information for the first channel information. For example, the second precoder is a precoder corresponding to channel information recovered by the network device by processing the feedback information for the first channel information.

With reference to the first aspect, in some implementations of the first aspect, the first compensation amount is determined based on a difference between a second parameter value of the first parameter and a third parameter value of the first parameter, the second parameter value of the first parameter reflects downlink channel quality in a case in which the network device uses a third precoder, the third parameter value of the first parameter reflects downlink channel quality in a case in which the network device uses a fourth precoder, the fourth precoder corresponds to feedback information for second channel information, the feedback information for the second channel information is based on a measurement result of a second downlink reference signal, and the third precoder is the same as the first precoder, or the third precoder and the first precoder are generated in a same manner.

According to the solution in this embodiment of this application, because the third precoder and the first precoder are assumed in a same manner, a manner of calculating the downlink channel quality in the case in which the first precoder is used is the same as a manner of calculating the downlink channel quality in the case in which the third precoder is used, and a difference between the downlink channel quality in the case in which the network device uses the third precoder and the downlink channel quality in the case in which the network device uses the fourth precoder is similar to the difference between the downlink channel quality in the case in which the network device uses the first precoder and the downlink channel quality in the case in which the network device uses the second precoder. In this way, the first parameter value of the first parameter is compensated for based on the difference between the downlink channel quality in the case in which the network device uses the third precoder and the downlink channel quality in the case in which the network device uses the fourth precoder. Even if the terminal device cannot learn of the second precoder, a parameter value fed back by the terminal device can accurately reflect the downlink channel quality in the case in which the network device uses the second precoder.

For example, the third precoder and the first precoder may be a same fixed value.

For example, both the first precoder and the third precoder are 1.

For another example, both the first precoder and the third precoder are identity matrices.

Alternatively, the third precoder and the first precoder may be a same non-fixed value.

For example, the third precoder is a precoder corresponding to the second channel information, and the first precoder is also a precoder corresponding to the second channel information.

That the third precoder and the first precoder are generated in a same manner may be understood as that the third precoder and the first precoder are generated according to a same rule.

For example, a precoder assumed during calculation of the first parameter value of the first parameter and a precoder assumed during calculation of the second parameter value of the first parameter are a precoder corresponding to channel information of the first parameter value and a precoder corresponding to channel information of the second parameter value respectively. **In** this case, the third precoder is a precoder corresponding to the second channel information, and the first precoder is a precoder corresponding to the first channel information.

With reference to the first aspect, in some implementations of the first aspect, the first compensation amount is the difference between the second parameter value of the first parameter and the third parameter value of the first parameter.

With reference to the first aspect, in some implementations of the first aspect, a first downlink transmission is received from the network device, where the first downlink transmission is a downlink transmission that is not processed by using the fourth precoder; a second downlink transmission is received from the network device, where the second downlink transmission is a downlink transmission processed by using the fourth precoder, and a receiving moment of the first downlink transmission and a receiving moment of the second downlink transmission are earlier than a receiving moment of the first downlink reference signal; the second parameter value of the first parameter is determined based on a measurement result of the first downlink transmission and the third precoder; and the third parameter value of the first parameter is determined based on a measurement result of the second downlink transmission.

The "not processed by using the fourth precoder" and the "processed by using the fourth precoder" are relative concepts. That the second downlink transmission is a downlink transmission processed by using the fourth precoder indicates a downlink transmission that is additionally processed by using the fourth precoder compared with the first downlink transmission.

**In** this embodiment of this application, channel estimation is performed on the downlink transmission processed by using the fourth precoder and the downlink transmission that is not processed by using the fourth precoder, to separately calculate parameter values of the first parameter in different cases, and determine the first compensation amount, so that the terminal device can perform compensation based on this.

With reference to the first aspect, in some implementations of the first aspect, the first downlink transmission is the second downlink reference signal.

With reference to the first aspect, in some implementations of the first aspect, that a second downlink transmission is received from the network device includes: receiving the second downlink transmission in a first time period, where a downlink transmission in the first time period is a downlink transmission in which the fourth precoder is used.

For example, the first time period is a time period after a first moment. The first moment is determined based on a moment at which the feedback information for the second channel information is sent and a first time offset.

The moment at which the terminal device sends the feedback information for the second channel information may be a start moment or an end moment at which the feedback information for the second channel information is sent.

The first time offset may be predefined, or the first time offset may be indicated by the network device.

Alternatively, the first time period is a time period between a second moment and a third moment.

The second moment is determined based on a moment at which the feedback information for the second channel information is sent and a second time offset. The second time offset may be predefined, or the second time offset may be indicated by the network device.

The third moment may be determined based on a moment at which the feedback information for the second channel information is sent and a third time offset. The second time offset is different from the third time offset.

The third time offset may be predefined, or the third time offset may be indicated by the network device.

**In** this embodiment of this application, the downlink transmission in the first time period is processed by using the fourth precoder, and the terminal device may measure the downlink transmission in the first time period, to determine the second downlink transmission and calculate the third parameter value of the first parameter.

With reference to the first aspect, in some implementations of the first aspect, there is a first association relationship between the first downlink transmission and the second downlink transmission.

The first association relationship may be predefined, or may be configured by the network device.

Optionally, the first association relationship includes a channel-associated relationship.

In other words, the first downlink transmission and the second downlink transmission may be channel-associated downlink transmissions.

Optionally, the first association relationship includes an association relationship between downlink transmission resources.

Associated downlink transmission resources may be predefined, or may be configured by the network device.

For example, the first downlink transmission is a downlink reference signal closest to the second downlink transmission.

Alternatively, the first association relationship includes a relative relationship, for example, a time domain offset, between a resource for the first downlink transmission and a resource for the second downlink transmission.

In this embodiment of this application, the terminal device determines two downlink transmissions having the first association relationship, to calculate the second parameter value of the first parameter and the third parameter value of the first parameter based on the two downlink transmissions.

With reference to the first aspect, in some implementations of the first aspect, the method further includes: receiving a third downlink transmission from the network device, where the third downlink transmission is a downlink transmission that is not processed by using the fourth precoder; receiving second indication information from the network device, where the second indication information indicates the fourth precoder, and a receiving moment of the third downlink transmission and a receiving moment of the second indication information are earlier than a receiving moment of the first downlink reference signal; determining the second parameter value of the first parameter based on a measurement result of the third downlink transmission and the third precoder; and determining the third parameter value of the first parameter based on the fourth precoder.

According to the solution in this embodiment of this application, the network device may indicate the fourth precoder, so that the terminal device can calculate the third parameter value of the first parameter based on the fourth precoder, to determine the first compensation amount.

With reference to the first aspect, in some implementations of the first aspect, the method further includes: receiving third indication information from the network device, where the third indication information indicates the first compensation amount.

With reference to the first aspect, in some implementations of the first aspect, both the first parameter and the second parameter are used to determine one or more of a modulation scheme, a code rate, or coding efficiency.

With reference to the first aspect, in some implementations of the first aspect, the first parameter includes a downlink transmission to interference plus noise ratio SINR, a signal-to-noise ratio SNR, or reference downlink transmission received power RSRP, and the second parameter includes a channel quality indicator CQI.

With reference to the first aspect, in some implementations of the first aspect, the first parameter and the second parameter are a same parameter, and the first parameter includes a CQI, an SINR, an SNR, or RSRP.

The parameter value of the second parameter is a parameter value, obtained through compensation, of the first parameter.

With reference to the first aspect, in some implementations of the first aspect, the method further includes: sending fourth indication information to the network device, where the fourth indication information indicates at least one of the following: that the parameter value of the second parameter is obtained through compensation, the first compensation amount, a manner of calculating the first compensation amount, or a data source on which calculation of the first compensation amount depends, and the data source includes one or more of a precoder, a downlink channel, or a downlink reference signal that is indicated.

The indicating a data source on which calculation of the first compensation amount depends may be understood as indicating a specific precoder, downlink channel, or downlink reference signal based on which the terminal device calculates a compensation amount.

For example, the data source on which calculation of the first compensation amount depends may include the first downlink transmission and the second downlink transmission. The first downlink transmission may be the second downlink reference signal. The second downlink transmission may be a PDSCH transmission or a physical downlink control channel (physical downlink control channel, PDCCH) transmission. In other words, the fourth indication information may indicate to determine the first compensation amount based on the first downlink reference signal and the second downlink transmission.

For example, the data source on which calculation of the first compensation amount depends may include the second indication information and the third downlink transmission. The third downlink transmission may be the second downlink reference signal. The second indication information is also a downlink transmission, and indicates a precoder. In other words, the fourth indication information may indicate to determine the first compensation amount based on the second indication information and the third downlink transmission. For example, the fourth indication information may indicate to determine the first compensation amount based on the precoder indicated by the second indication information and measurement results for the second indication information and the third downlink transmission.

For example, the data source may be indicated in at least one of the following manners: an identifier of a precoder, an identifier of a downlink channel, or an identifier of a downlink reference signal.

For example, when the first compensation amount is calculated based on the first downlink transmission and the second downlink transmission, the fourth indication information may indicate an identifier of the first downlink transmission and an identifier of the second downlink transmission, to notify the network device that the first compensation amount is determined based on data sources with the two identifiers.

Alternatively, the data source may be indicated in at least one of the following manners: a sending moment for a precoder, a sending moment for a downlink channel, or a sending moment for a downlink reference signal.

The moment may be represented in at least one of the following manners: a symbol, a slot, or a subframe.

For example, when the first compensation amount is calculated based on the second indication information and the third downlink transmission, the fourth indication information may indicate a sending moment for the second indication information and a sending moment for the third downlink transmission, to notify the network device that the first compensation amount is determined based on data sources whose sending moments are the two moments.

This can avoid excessive compensation caused by repeatedly compensating for the parameter value of the second parameter by the terminal device and the network device.

With reference to the first aspect, in some implementations of the first aspect, before the compensating for the first parameter value of the first parameter based on a first compensation amount, the method further includes: receiving fifth indication information from the network device, where the fifth indication information indicates at least one of the following: that the terminal device is to perform compensation, a manner of calculating the first compensation amount, or a data source on which calculation of the first compensation amount depends, and the data source includes one or more of a precoder, a downlink channel, or a downlink reference signal that is indicated.

For example, the data source may be indicated in at least one of the following manners: an identifier of a precoder, an identifier of a downlink channel, or an identifier of a downlink reference signal.

For example, when the first compensation amount is calculated based on the first downlink transmission and the second downlink transmission, the fifth indication information may indicate an identifier of the first downlink transmission and an identifier of the second downlink transmission, so that the terminal device can determine the first compensation amount based on data sources with the two identifiers.

Alternatively, the data source may be indicated in at least one of the following manners: a sending moment for a precoder, a sending moment for a downlink channel, or a sending moment for a downlink reference signal.

The moment may be represented in at least one of the following manners: a symbol, a slot, or a subframe.

For example, when the first compensation amount is calculated based on the second indication information and the third downlink transmission, the fifth indication information may indicate a sending moment for the second indication information and a sending moment for the third downlink transmission, so that the terminal device can determine the first compensation amount based on data sources whose sending moments are the two moments.

This can avoid excessive compensation caused by repeatedly compensating for the parameter value of the second parameter by the terminal device and the network device.

With reference to the first aspect, in some implementations of the first aspect, the method further includes: sending sixth indication information to the network device, where the sixth indication information indicates a capability of the terminal device to support compensation.

The capability of the terminal device to support compensation may also be referred to as a compensation capability of the terminal device.

For example, the capability of the terminal device to support compensation may include: whether the terminal device can perform compensation. The sixth indication information indicates whether the terminal device supports compensation.

With reference to the first aspect, in some implementations of the first aspect, the first precoder is any precoder different from the second precoder, or the first precoder is a precoder corresponding to the first channel information.

According to a second aspect, a communication method is provided. The method may be performed by a network device, or may be performed by a chip or a circuit configured in a network device. This is not limited in this application.

The method includes: sending a first downlink reference signal to a terminal device; and receiving first indication information from the terminal device, where the first indication information indicates a parameter value of a second parameter and feedback information for first channel information, the feedback information for the first channel information is based on a measurement result of the first downlink reference signal, the feedback information for the first channel information corresponds to a second precoder, the parameter value of the second parameter is obtained by compensating for a first parameter value of the first parameter based on a first compensation amount, the first parameter value of the first parameter is based on the measurement result of the first downlink reference signal and a first precoder, the first parameter reflects downlink channel quality, the first compensation amount indicates a difference between downlink channel quality in a case in which a network device uses the first precoder and downlink channel quality in a case in which the network device uses the second precoder, and the second parameter and the first parameter are a same parameter, or the second parameter is another parameter that is different from the first parameter and that reflects the downlink channel quality.

With reference to the second aspect, in some implementations of the second aspect, the first compensation amount is based on a difference between a second parameter value of the first parameter and a third parameter value of the first parameter, the second parameter value of the first parameter reflects downlink channel quality in a case in which the network device uses a third precoder, the third parameter value of the first parameter reflects downlink channel quality in a case in which the network device uses a fourth precoder, the fourth precoder corresponds to feedback information for second channel information, the feedback information for the second channel information is based on a measurement result of a second downlink reference signal, and the third precoder is the same as the first precoder, or the third precoder and the first precoder are generated in a same manner.

With reference to the second aspect, in some implementations of the second aspect, the method further includes: sending a first downlink transmission to the terminal device, where the first downlink transmission is a downlink transmission that is not processed by using the fourth precoder; and sending a second downlink transmission to the terminal device, where the second downlink transmission is a downlink transmission processed by using the fourth precoder, a sending moment for the first downlink transmission and a sending moment for the second downlink transmission are earlier than a sending moment for the first downlink reference signal, the second parameter value of the first parameter is based on a measurement result of the first downlink transmission and the third precoder, and the third parameter value of the first parameter is based on a measurement result of the second downlink transmission.

With reference to the second aspect, in some implementations of the second aspect, the first downlink transmission is the second downlink reference signal.

With reference to the second aspect, in some implementations of the second aspect, the sending a second downlink transmission to the terminal device includes: sending the second downlink transmission to the terminal device in a first time period, where a downlink transmission in the first time period is a downlink transmission in which the fourth precoder is used.

With reference to the second aspect, in some implementations of the second aspect, there is a first association relationship between the first downlink transmission and the second downlink transmission.

With reference to the second aspect, in some implementations of the second aspect, a third downlink transmission is sent to the terminal device, where the third downlink transmission is a downlink transmission that is not processed by using the fourth precoder; and second indication information is sent to the terminal device, where the second indication information indicates the fourth precoder, a sending moment for the third downlink transmission and a sending moment for the second indication information are earlier than a sending moment for the first downlink reference signal, the second parameter value of the first parameter is based on a measurement result of the third downlink transmission and the third precoder, and the third parameter value of the first parameter is based on the fourth precoder.

With reference to the second aspect, in some implementations of the second aspect, the method further includes: sending third indication information to the terminal device, where the third indication information indicates the first compensation amount.

With reference to the second aspect, in some implementations of the second aspect, the first parameter and the second parameter are used to determine one or more of a modulation scheme, a code rate, or coding efficiency.

With reference to the second aspect, in some implementations of the second aspect, the first parameter includes a downlink transmission to interference plus noise ratio SINR, a signal-to-noise ratio SNR, or reference downlink transmission received power RSRP, and the second parameter includes a channel quality indicator CQI.

With reference to the second aspect, in some implementations of the second aspect, the first parameter and the second parameter are a same parameter, and the first parameter includes a CQI, an SINR, an SNR, or RSRP.

With reference to the second aspect, in some implementations of the second aspect, the method further includes: receiving fourth indication information from the terminal device, where the fourth indication information indicates at least one of the following: that the parameter value of the second parameter is obtained through compensation, the first compensation amount, a manner of calculating the first compensation amount, or a data source on which calculation of the first compensation amount depends, and the data source includes one or more of a precoder, a downlink channel, or a downlink reference signal that is indicated.

With reference to the second aspect, in some implementations of the second aspect, the method further includes: sending fifth indication information to the terminal device, where the fifth indication information indicates at least one of the following: that the terminal device is to perform compensation, a manner of calculating the first compensation amount, or a data source on which calculation of the first compensation amount depends, and the data source includes one or more of a precoder, a downlink channel, or a downlink reference signal that is indicated.

With reference to the second aspect, in some implementations of the second aspect, the method further includes: receiving sixth indication information from the terminal device, where the sixth indication information indicates a capability of the terminal device to support compensation.

With reference to the second aspect, in some implementations of the second aspect, the first precoder is any precoder different from the second precoder, or the first precoder is a precoder corresponding to the first channel information.

According to a third aspect, a communication method is provided, including: receiving a first downlink reference signal from a network device; and sending fourth indication information to the network device, where the fourth indication information indicates at least one of the following: that a parameter value of a second parameter is obtained through compensation, a first compensation amount, a manner of calculating the first compensation amount, or a data source on which calculation of the first compensation amount depends, the data source includes one or more of a precoder, a downlink channel, or a downlink reference signal that is indicated, the first compensation amount is used to compensate for a first parameter value of a first parameter to obtain the parameter value of the second parameter, the first parameter value of the first parameter is based on a measurement result of the first downlink reference signal, the first parameter reflects downlink channel quality, and the second parameter and the first parameter are a same parameter, or the second parameter is another parameter that is different from the first parameter and that reflects downlink channel quality.

According to a fourth aspect, a communication method is provided, including: sending a first downlink reference signal to a terminal device; and receiving fourth indication information from the terminal device, where the fourth indication information indicates at least one of the following: that a parameter value of a second parameter is obtained through compensation, a first compensation amount, a manner of calculating the first compensation amount, or a data source on which calculation of the first compensation amount depends, the data source includes one or more of a precoder, a downlink channel, or a downlink reference signal that is indicated, the first compensation amount is used to compensate for a first parameter value of a first parameter to obtain the parameter value of the second parameter, the first parameter value of the first parameter is based on a measurement result of the first downlink reference signal, the first parameter reflects downlink channel quality, and the second parameter and the first parameter are a same parameter, or the second parameter is another parameter that is different from the first parameter and that reflects downlink channel quality.

According to a fifth aspect, a communication method is provided, including: receiving a first downlink reference signal from a network device; and receiving fifth indication information from the network device, where the fifth indication information indicates at least one of the following: that a terminal device is to perform compensation, a manner of calculating a first compensation amount, or a data source on which calculation of the first compensation amount depends, the data source includes one or more of a precoder, a downlink channel, or a downlink reference signal that is indicated, the first compensation amount is used by the terminal device to compensate for a first parameter value of a first parameter, the first parameter reflects downlink channel quality, and the first parameter value of the first parameter is based on a measurement result of the first downlink reference signal.

According to a sixth aspect, a communication method is provided, including: sending a first downlink reference signal to a terminal device; and sending fifth indication information to the terminal device, where the fifth indication information indicates at least one of the following: that the terminal device is to perform compensation, a manner of calculating a first compensation amount, or a data source on which calculation of the first compensation amount depends, the data source includes one or more of a precoder, a downlink channel, or a downlink reference signal that is indicated, the first compensation amount is used by the terminal device to compensate for a first parameter value of a first parameter, the first parameter reflects downlink channel quality, and the first parameter value of the first parameter is based on a measurement result of the first downlink reference signal.

It should be understood that extensions, limitations, explanations, and descriptions of related content in the first aspect are also applicable to same content in the second aspect, the third aspect, and the fourth aspect.

According to a seventh aspect, a communication method is provided, including: receiving a third downlink reference signal from a network device; measuring the third downlink reference signal to obtain third channel information; sending seventh indication information to the network device, where the seventh indication information indicates feedback information for the third channel information, and the feedback information for the third channel information is obtained by processing the third channel information by using a first AI model; receiving eighth indication information from the network device, where the eighth indication information indicates recovery information for the third channel information, and the recovery information for the third channel information is based on a result of processing the feedback information for the third channel information by using a second AI model; and sending ninth indication information to the network device, where the ninth indication information indicates performance of the first AI model and the second AI model, and the performance is based on a difference between the third channel information and the recovery information for the third channel information.

According to the solution in this embodiment of this application, a terminal device may determine the difference between the recovery information for the third channel information and the third channel information, to monitor the performance of the first AI model and the performance of the second AI model. The ninth indication information indicates the performance of the first AI model and the performance of the second AI model. The terminal device reports the ninth indication information to the network device, to notify the network device of the performance of the first AI model and the performance of the second AI model. This facilitates subsequent decision-making by the network device.

For example, the first AI model may be a CSI generator, and the second AI model may be a CSI reconfigurator.

With reference to the seventh aspect, in some implementations of the seventh aspect, the third channel information is determined based on a correspondence between channel information and recovery information for the channel information.

The terminal device may determine the third channel information based on the correspondence, to calculate the difference between the third channel information and the recovery information for the third channel information.

The correspondence may be predefined, or may be configured by the network device.

With reference to the seventh aspect, in some implementations of the seventh aspect, tenth indication information is received from the network device, where the tenth indication information indicates the third channel information.

The terminal device may determine the third channel information based on the tenth indication information, to calculate the difference between the third channel information and the recovery information for the third channel information.

For example, the tenth indication information indicates an identifier of the feedback information for the third channel information.

Alternatively, the tenth indication information indicates a sending moment for the feedback information for the third channel information.

With reference to the seventh aspect, in some implementations of the seventh aspect, the difference between the recovery information for the third channel information and the third channel information is represented as a similarity and/or a degree of difference between the recovery information for the third channel information and the third channel information.

For example, the similarity may be a cosine similarity, for example, a generalized cosine similarity (generalized cosine similarity, GCS) or a squared generalized cosine similarity (squared generalized cosine similarity, SGCS).

For example, the degree of difference may be a mean square error (mean square error, MSE) or a normalized mean square error (normalized mean square error, NMSE).

With reference to the seventh aspect, in some implementations of the seventh aspect, the ninth indication information may indicate at least one of the following: the similarity between the recovery information for the third channel information and the third channel information, the degree of difference between the recovery information for the third channel information and the third channel information, whether the similarity between the recovery information for the third channel information and the third channel information is greater than a first threshold, or whether the degree of difference between the recovery information for the third channel information and the third channel information is greater than a second threshold.

The first threshold may be predefined, or may be configured by the network device.

The second threshold may be predefined, or may be configured by the network device.

According to an eighth aspect, a communication method is provided, including: sending a third downlink reference signal to a terminal device; receiving seventh indication information from the terminal device, where the seventh indication information indicates feedback information for third channel information, the feedback information for the third channel information is based on a result of processing the third channel information by using a first AI model, and the third channel information is based on a measurement result of the third downlink reference signal; sending eighth indication information to the terminal device, where the eighth indication information indicates recovery information for the third channel information, and the recovery information for the third channel information is obtained by processing the feedback information for the third channel information by using a second AI model; and receiving ninth indication information from the terminal device, where the ninth indication information indicates performance of the first AI model and the second AI model, and the performance is based on a difference between the third channel information and the recovery information for the third channel information.

According to the solution in this embodiment of this application, the ninth indication information indicates the performance of the first AI model and the performance of the second AI model. The terminal device reports the ninth indication information to a network device, to notify the network device of the performance of the first AI model and the performance of the second AI model. This facilitates subsequent decision-making by the network device.

With reference to the eighth aspect, in some implementations of the eighth aspect, tenth indication information is sent to the terminal device, where the tenth indication information indicates the third channel information.

With reference to the eighth aspect, in some implementations of the eighth aspect, the difference between the recovery information for the third channel information and the third channel information is represented as a similarity and/or a degree of difference between the recovery information for the third channel information and the third channel information.

With reference to the eighth aspect, in some implementations of the eighth aspect, the ninth indication information may indicate at least one of the following: the similarity between the recovery information for the third channel information and the third channel information, the degree of difference between the recovery information for the third channel information and the third channel information, whether the similarity between the recovery information for the third channel information and the third channel information is greater than a first threshold, or whether the degree of difference between the recovery information for the third channel information and the third channel information is greater than a second threshold.

It should be understood that extensions, limitations, explanations, and descriptions of related content in the seventh aspect are also applicable to same content in the eighth aspect.

According to a ninth aspect, a communication apparatus is provided. The communication apparatus may be a terminal device, or may be an apparatus, a module, a circuit, a chip, or the like that is configured and disposed in a terminal device, or may be an apparatus that can be used in cooperation with a terminal device. In a design, the communication apparatus may include modules that are in a one-to-one correspondence with the methods/operations/steps/actions described in the first aspect, the third aspect, the fifth aspect, or the seventh aspect. The modules may be hardware circuits or software, or may be implemented by a hardware circuit in combination with software. In a design, the communication apparatus may include a processing module and a communication module.

According to a tenth aspect, a communication apparatus is provided. The communication apparatus may be a network device, or may be an apparatus, a module, a circuit, a chip, or the like that is configured and disposed in a network device, or may be an apparatus that can be used in cooperation with a network device. In a design, the communication apparatus may include modules that are in a one-to-one correspondence with the methods/operations/steps/actions described in the second aspect, the fourth aspect, the sixth aspect, or the eighth aspect. The modules may be hardware circuits or software, or may be implemented by a hardware circuit in combination with software. In a design, the communication apparatus may include a processing module and a communication module.

According to an eleventh aspect, a communication apparatus is provided, including a processor and a storage medium. The storage medium stores instructions. When the instructions are run by the processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a twelfth aspect, a communication apparatus is provided, including a processor. The processor is configured to process data and/or information, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented. Optionally, the communication apparatus may further include a communication interface. The communication interface is configured to receive data and/or information, and transmit the received data and/or information to the processor. Optionally, the communication interface is further configured to output data and/or information processed by the processor.

According to a thirteenth aspect, a chip is provided, including a processor. The processor is configured to run a program or instructions, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented. Optionally, the chip may further include a memory, and the memory is configured to store a program or instructions. Optionally, the chip may further include a transceiver.

According to a fourteenth aspect, a computer-readable storage medium is provided. The computer-readable storage medium includes instructions. When the instructions are run by a processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a fifteenth aspect, a computer program product is provided. The computer program product includes computer program code or instructions. When the computer program code or the instructions are run, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a sixteenth aspect, a communication system is provided, including the communication apparatus according to any one of the ninth aspect or the possible implementations of the ninth aspect and the communication apparatus according to any one of the tenth aspect or the possible implementations of the tenth aspect.

**BRIEF DESCRIPTION OF DRAWINGS**

FIG. 1 is a diagram of a communication system to which embodiments of this application are applicable;
FIG. 2 is a diagram of another communication system to which embodiments of this application are applicable;
FIG. 3 is a diagram of an AI application framework;
FIG. 4 is a schematic flowchart of CSI feedback;
FIG. 5 is a schematic flowchart of a PMI determining process;
FIG. 6 is another schematic flowchart of CSI feedback;
FIG. 7 is a schematic flowchart of a communication method according to this application;
FIG. 8 is a schematic flowchart of another communication method according to this application;

FIG. 9 is a schematic flowchart of still another communication method according to this application;

FIG. 10 is a schematic flowchart of still another communication method according to this application;

FIG. 11 is a schematic flowchart of still another communication method according to this application;

FIG. 12 is a schematic flowchart of still another communication method according to this application;

FIG. 13 is a schematic flowchart of still another communication method according to this application;

FIG. 14 is a schematic flowchart of still another communication method according to this application;

FIG. 15 is a schematic flowchart of still another communication method according to this application;

FIG. 16 is a schematic flowchart of still another communication method according to an embodiment of this application;

FIG. 17 is a block diagram of a communication apparatus according to an embodiment of this application; and

FIG. 18 is a block diagram of another communication apparatus according to an embodiment of this application.

## DESCRIPTION OF EMBODIMENTS

The following describes technical solutions of this application with reference to accompanying drawings.

The technical solutions provided in this application may be used in various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation (6th generation, 6G) mobile communication system, or a converged system of a plurality of systems. The technical solutions provided in this application may be further used in device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It can be understood that the terminal device in this disclosure may be replaced with a first network element, the network device may be replaced with a second network element, and the terminal device and the network device perform a corresponding communication method in this disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data for a user, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a terminal device in a 5G network, or a terminal device in a future evolved public land mobile network (public land mobile network, PLMN). This is not limited in embodiments of this application.

As an example rather than a limitation, in embodiments of this application, the terminal device may alternatively be a wearable device. The wearable device may also be referred to as a wearable intelligent device, and is a general term for a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without relying on smartphones, for example, smartwatches or smart glasses, and devices that focus only on one type of application function and need to be used in cooperation with other devices such as smartphones, for example, various smart bands or smart jewelry used for monitoring physical signs.

In embodiments of this application, an apparatus for implementing a function of the terminal device may be the terminal device, or may be an apparatus that can enable the terminal device to implement the function, for example, a chip system, where the apparatus may be mounted in the terminal device or used in cooperation with the terminal device. In embodiments of this application, the chip system may include a chip, or may include a chip and another discrete component. In embodiments of this application, that the apparatus for implementing the function of the terminal device is the terminal device is only used as an example for description, but does not constitute a limitation on solutions in embodiments of this application.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next-generation NodeB (next-generation NodeB, gNB), a relay station, an access point, a transmitting and receiving point (transmitting and receiving point, TRP), a transmitting point (transmitting point, TP), a master station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that performs a function of a base station in D2D, V2X, or M2M communication, a network-side device in a 6G network, a device that performs a function of a base station in a future communication system, or the like. The base station may support networks of a same access technology or different access technologies. A specific technology and a specific device form that are used for the network device are not limited in embodiments of this application.

The base station may be stationary or movable. For example, a helicopter or an uncrewed aerial vehicle may be configured as a movable base station, and one or more cells may move based on a position of the movable base station. In other examples, a helicopter or an uncrewed aerial vehicle may be configured as a device for communicating with another base station.

In some deployments, the network device mentioned in embodiments of this application may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus for implementing a function of the network device may be the network device, or may be an apparatus that can enable the network device to implement the function, for example, a chip system, a hardware circuit, a software module, or a combination of a hardware circuit and a software module, where the apparatus may be mounted in the network device or used in cooperation with the network device. In embodiments of this application, that the apparatus for implementing the function of the network device is the network device is only used as an example for description, but does not constitute a limitation on solutions in embodiments of this application.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or an ultra-large connection. This feature makes network planning, network configuration, and/or resource scheduling increasingly complex. In addition, because the network has increasingly powerful functions, for example, supporting an increasingly high spectrum and supporting new technologies such as a higher-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the artificial intelligence technology in the wireless network, a dedicated AI network element or AI module may be further introduced into the network. If the AI network element is introduced, the AI network element corresponds to an independent network element. If the AI module is introduced, the AI module may be located in a specific network element, and the corresponding network element may be a terminal device, a network device, or the like.

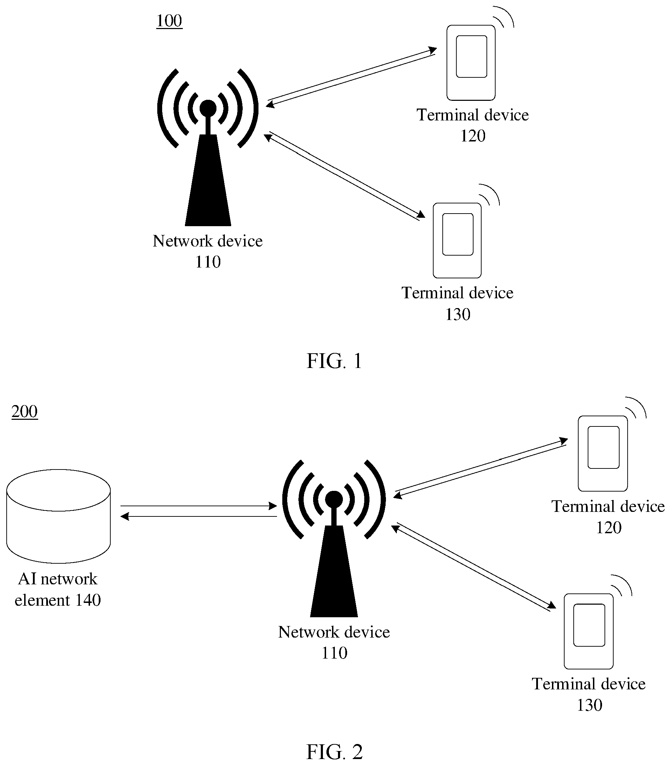

FIG. 1 is a diagram of a communication system to which a communication method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

FIG. 2 is a diagram of another communication system to which a communication method according to an embodiment of this application is applicable. Compared with the communication system 100 shown in FIG. 1, the communication system 200 shown in FIG. 2 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs a training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device.

It should be understood that, in FIG. 2, that the AI network element 140 is directly connected to the network device 110 is only used an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 through a third-party network element.

The AI network element 140 may alternatively be disposed in a network device and/or a terminal device as a module, for example, disposed in the network device 110 shown in FIG. 1.

It should be noted that FIG. 1 and FIG. 2 are merely simplified diagrams of examples for ease of understanding. For example, the communication system may further include another device, for example, may further include a wireless relay device and/or a wireless backhaul device, which are not shown in FIG. 1 and FIG. 2. During actual application, the communication system may include a plurality of network devices, and may also include a plurality of terminal devices. Quantities of network devices and terminal devices included in the communication system are not limited in embodiments of this application.

For ease of understanding solutions in embodiments of this application, the following describes terms that may be used in embodiments of this application.

(1) Artificial intelligence (artificial intelligence, AI):

An AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

Embodiments of this application relate to an encoder for compressing CSI and a decoder for recovering compressed CSI. The encoder and the decoder are used in cooperation. It can be understood that the encoder and the decoder are matching AI models. One encoder may include one or more AI models, and a decoder matching the encoder also includes one or more AI models. An encoder and a decoder that are used in cooperation include a same quantity of AI models, and AI models included in the encoder are in a one-to-one correspondence with AI models included in the decoder.

In a possible design, a set of encoder (encoder) and decoder (decoder) that are used in cooperation may be specifically two parts of a same auto-encoder (auto-encoder, AE). The auto-encoder is an unsupervised learning neural network, and is characterized by using input data as label data. Therefore, the auto-encoder may also be understood as a self-supervised learning neural network. The auto-encoder may be configured to compress and recover data. For example, the encoder in the auto-encoder may compress (encode) data A to obtain data B, and the decoder in the auto-encoder may decompress (decode) the data B to recover the data A. Alternatively, this may be understood as that the decoder performs an inverse operation of an operation performed by the encoder.

(2) Neural network (neural network, NN):

A neural network is a specific implementation form of AI or machine learning. According to the universal approximation theorem, a neural network can approximate any continuous function in theory, so that the neural network has a capability of learning any mapping.

The neural network may include a neuron. The neuron may be an operation unit that uses $x_s$ and an intercept of 1 as an input. An output of the operation unit may be as follows:

$$h_{W,b}(x) = f(W^T x) = f(\sum_{s=1}^{n} W_s x_s + b)$$

s=1, 2, ..., or n, n is a natural number greater than 1, $W_s$ is a weight of $x_s$, and b is a bias of the neuron. f is an activation function (activation function) of the neuron, and is configured to perform nonlinear transformation on a feature obtained from the neural network, introduce a nonlinear feature into the neural network, and convert an input signal in the neuron into an output signal. The output signal of the activation function may serve as an input for a next convolutional layer. The activation function may be a sigmoid function. The neural network is a network formed by connecting many individual neurons together. To be specific, an output of a neuron may be an input for another neuron. An input for each neuron may be connected to a local receptive field of a previous layer to extract a feature of the local receptive field. The local receptive field may be a region including several neurons.

For example, the type of the AI model is a neural network. The AI model in this disclosure may be a deep neural network (deep neural network, DNN). Based on a network construction mode, the DNN may include a feedforward neural network (feedforward neural network, FNN), a convolutional neural network (convolutional neural network, CNN), and a recurrent neural network (recurrent neural network, RNN).

(3) Training dataset and inference data:

A training dataset is used for training an AI model. The training dataset may include an input for the AI model, or include an input for the AI model and a target output of the AI model. The training dataset includes one or more pieces of training data. The training data may include a training sample input to the AI model, or may include a target output of the AI model. The target output may also be referred to as a label or a label sample.

Model training is essentially learning some features of training data from the training data. During training for an AI model (for example, a neural network model), because an output of the AI model is expected to be close, as much as possible, to a predicted value that is actually expected, a predicted value of a current network may be compared with a target value that is actually expected, and then a weight vector of each layer of the AI model is updated based on a difference between the predicted value and the target value (certainly, before a 1st update, an initialization process is usually performed, to be specific, parameters are preconfigured for all layers of the AI model). For example, if the predicted value of the network is large, the weight vector is adjusted to decrease the predicted value, and adjustment is continuously performed until the AI model can obtain, through prediction, the target value that is actually expected or a value that is quite close to the target value that is actually expected. Therefore, "how to obtain, through comparison, a difference between a predicted value and a target value" needs to be predefined. This is a loss function (loss function) or an objective function (objective function). The loss function and the objective function are important equations for measuring a difference between a predicted value and a target value. The loss function is used as an example. A larger output value (loss) of the loss function indicates a greater difference. In this case, the training for the AI model is a process of minimizing the loss, to make a value of the loss function less than a threshold, or make a value of the loss function meet a target requirement. For example, the AI model is a neural network, and adjusting a model parameter of the neural network includes adjusting at least one of the following parameters: a quantity of layers and a width of the neural network, a weight of a neuron, or a parameter in an activation function of a neuron.

Inference data may be used as an input for a trained AI model and used for inference by the AI model. During model inference, the inference data is input to the AI model to obtain a corresponding output, namely, an inference result.

(4) AI model design:

An AI model design mainly includes a data capture phase (for example, capturing training data and/or inference data), a model training phase, and a model inference phase, and may further include an inference result application phase.

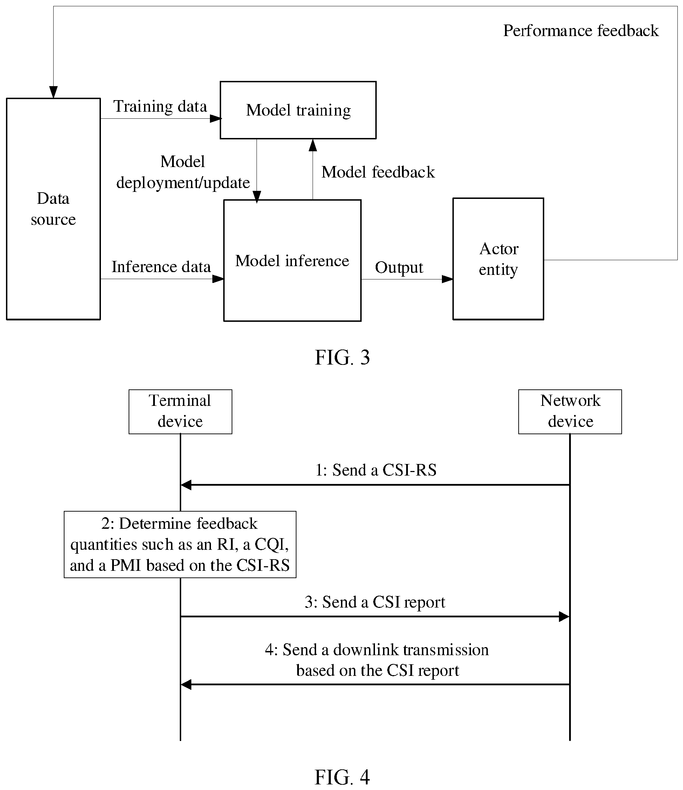

FIG. 3 shows an AI application framework.

In the data capture phase, a data source (data source) is used to provide a training dataset and inference data. In the model training phase, the training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain an output through the AI model, where the output is the inference result. The inference result may indicate a configuration parameter used (executed) by an actor object, and/or an operation performed by the actor object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent model update training.

It can be understood that a communication system may include a network element with an artificial intelligence function. The foregoing processes related to the AI model design may be performed by one or more network elements with the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device through a third-party network element. The third-party network element may be a core-network network element, for example, an authentication management function (authentication management function, AMF) network element or a user plane function (user plane function, UPF) network element, an OAM, a cloud server, or another network element. This is not limited. For example, the AI network element 140 is introduced into the communication system shown in FIG. 2.

Training processes for different models may be deployed on different devices or nodes, or may be deployed on a same device or node. Inference processes for different models may be deployed on different devices or nodes, or may be deployed on a same device or node. For example, a model training phase is performed by a terminal device. After training an encoder and a decoder that are used in cooperation, the terminal device may send a model parameter of the decoder to a network device. For example, a model training phase is performed by a network device. After training an encoder and a decoder that are used in cooperation, the network device may indicate a model parameter of the encoder to a terminal device. For example, a model training phase is performed by an independent AI network element. After training an encoder and a decoder that are used in cooperation, the AI network element may send a model parameter of the encoder to a terminal device, and send a model parameter of the decoder to a network device. Then a model inference phase corresponding to the encoder is performed on the terminal device, and a model inference phase corresponding to the decoder is performed on the access network device.

The model parameter may include one or more of the following: a structure parameter of the model (for example, a quantity of layers and/or a weight of the model), an input parameter of the model (for example, an input dimension and a quantity of input ports), or an output parameter of the model (for example, an output dimension and a quantity of output ports). It can be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

(5) CSI feedback:

In a communication system (for example, an LTE communication system or an NR communication system), a network device needs to obtain CSI, and determine, based on the CSI, configurations, such as a resource, a modulation and coding scheme (modulation and coding scheme, MCS), and a precoder, for scheduling a downlink data channel for a terminal device. It can be understood that the CSI is channel information, and is information that can indicate a channel characteristic and channel quality. The channel information may also be referred to as a channel response. For example, the CSI may be represented by using a channel matrix, for example, the CSI includes the channel matrix; or the CSI may include a channel eigenvector.

In a TDD system, because an uplink channel and a downlink channel are reciprocal, a network device may obtain uplink CSI by measuring an uplink reference signal, and then infer accurate downlink CSI, for example, use the uplink CSI as the downlink CSI.

In an FDD system, an uplink signal and a downlink channel are not reciprocal, in other words, reciprocity cannot be ensured. Downlink CSI is obtained by a terminal device by measuring a downlink reference signal (reference signal, RS). For example, the terminal device may obtain the downlink CSI by measuring a CSI-RS or a synchronization signal/physical broadcast channel block (synchronization signal/physical broadcast channel block, SSB or SS/PBCH). The terminal device generates a CSI report in a manner predefined in a protocol or in a manner configured by a network device, and feeds back the CSI report to the network device, so that the network device obtains the downlink CSI.

For example, a CSI parameter may include at least one of the following: a CQI, a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), or the like. The signal to interference plus noise ratio may also be referred to as SINR.

FIG. 4 is a diagram of a CSI feedback process.

As shown in FIG. 4, the CSI feedback mainly includes the following steps.

Step 1: A network device sends a CSI-RS to a terminal device.

Step 2: The terminal device may determine feedback quantities such as an RI, a CQI, and a PMI based on the CSI-RS.

The terminal device may perform related measurement operations such as channel measurement and interference measurement based on the CSI-RS, and determine the feedback quantities such as the RI, the CQI, and the PMI based on measurement results. The RI indicates a quantity, recommended by the terminal device, of layers of downlink transmissions. The CQI indicates a modulation and coding scheme, determined by the terminal device, that can be supported in a current channel condition. The PMI indicates a precoder recommended by the terminal device. A quantity, indicated by the PMI, of layers of a precoder corresponds to the RI. For example, if the RI is n, the PMI indicates an n-layer precoder, where n is a positive integer.

Step 3: The terminal device sends a CSI report.

For example, the CSI report may indicate one or more of the RI, the CQI, the PMI, and the like.

Step 4: The network device performs downlink transmission based on the CSI report.

For example, the network device may determine a quantity of layers for the downlink transmission based on the RI, determine an MCS for the downlink transmission based on the CQI, and determine a precoder for the downlink transmission based on the PMI.

It should be understood that the RI, the CQI, the PMI, and the like that are indicated by the CSI report are only recommended values provided by the terminal device, and the network device may perform downlink transmission based on some or all of information indicated by the CSI report. Alternatively, the network device may perform downlink transmission without referring to information indicated by the CSI report.

The following describes an example process of determining the PMI by the terminal device.

The terminal device obtains a channel response H by measuring the CSI-RS. A dimension of H is $[N_{tx}, N_{rx}, N_{RB}]$, where $N_{tx}$ represents a quantity of antenna ports of the network device, $N_{rx}$ represents a quantity of antenna ports of the terminal device, and $N_{RB}$ represents a bandwidth, or may be represented as a quantity of resource blocks (resource block, RB). $N_{tx}$, $N_{rx}$, and $N_{RB}$ are positive integers. Dimension reduction is performed on the $[N_{tx}, N_{rx}, N_{RB}]$ - dimensional channel response H through eigen decomposition or singular value decomposition, to obtain an eigenmatrix of a downlink channel. A dimension of the eigenmatrix is $[N_{tx}, N_{sb}, N_{rank}]$, where $N_{sb}$ represents a quantity of subbands, and $N_{rank}$ represents the RI fed back by the terminal device. $N_{sb}$ and $N_{rank}$ are positive integers. The terminal device performs a compression operation and/or a quantization operation on the eigenmatrix based on a codebook predefined in a protocol, to obtain the PMI.

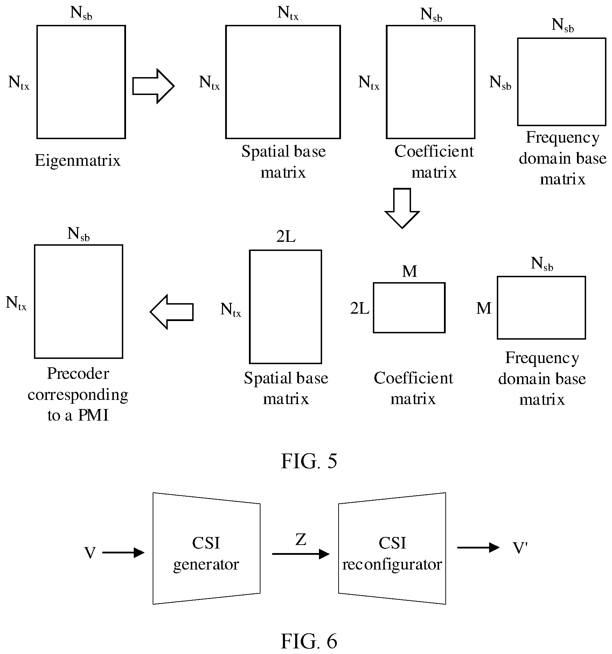

FIG. 5 is a diagram of a PMI determining process.

As shown in FIG. 5, a codebook with an RI of 1 is used as an example, and a dimension of an eigenmatrix is $N_{tx} * N_{sb}$. The eigenmatrix may be considered as a result of multiplying three matrices, to be specific, a result of multiplying a spatial base matrix, a coefficient matrix, and a frequency domain base matrix. A dimension of the spatial base matrix is $N_{tx} * N_{tx}$, a dimension of the coefficient matrix is $N_{tx} * N_{sb}$, and a dimension of the frequency domain base matrix is $N_{sb} * N_{sb}$. The spatial base matrix and the frequency domain base matrix are codebooks predefined in a protocol, for example, discrete Fourier transform (discrete Fourier transform, DFT) matrices. Because the coefficient matrix includes many coefficients with small values, dimension reduction may be performed on the three matrices, and only a spatial base and a frequency domain base that correspond to a coefficient with a large value in the coefficient matrix are retained. For example, 2L spatial bases are selected from $N_{tx}$ spatial bases, M frequency domain bases are selected from $N_{sb}$ frequency domain bases, and K coefficients are selected from $N_{tx} * N_{sb}$ coefficients. A dimension of a matrix including the 2L spatial bases is $N_{tx} * 2L$. A dimension of a matrix including the M frequency domain bases is $M * N_{sb}$. The K coefficients are some or all of coefficient values in a 2L*M coefficient matrix. Each coefficient may be quantized by using Q bits. The PMI reported by the terminal device may indicate all coefficients and indexes of spatial bases and frequency domain bases that correspond to the coefficients. A precoder corresponding to the PMI reported by the terminal device is a precoder determined based on a coefficient reported by the terminal device and a spatial base and a frequency domain base that correspond to the coefficient, that is, a precoding matrix corresponding to the PMI in FIG. 5. Optionally, it is assumed that a coefficient not reported is 0.

In the foregoing process, a meaning of each bit in the codebook and the PMI is predefined in a protocol. The foregoing manner of determining the PMI by the terminal device is merely an example, and does not constitute a limitation on solutions in embodiments of this application.

An AI technology is introduced into a wireless communication network to obtain an AI model-based CSI feedback mode. A terminal device compresses and feeds back CSI by using an AI model, and a network device recovers compressed CSI by using an AI model. A sequence (for example, a bit sequence) is transmitted in AI-based CSI feedback, and overheads are lower than overheads of CSI in conventional CSI feedback.

The following further describes examples of a training process and an inference process for an AI model in embodiments of this application.

A training dataset for training an encoder and a decoder includes a training sample and a sample label. For example, the training sample is channel information determined by a terminal device, and the sample label is real channel information. When the encoder and the decoder belong to a same auto-encoder, the training data may include only a training sample, in other words, the training sample is a sample label, namely, channel information.

A specific training process is as follows: A model training node processes one piece of channel information, namely, a training sample, by using the encoder to obtain channel state indication information, and processes the channel state indication information by using the decoder to obtain recovered channel information. Then a difference between the recovered channel information and a corresponding sample label, that is, a value of a loss function, is calculated, and parameters of the encoder and the decoder are updated based on the value of the loss function, so that the difference between the recovered channel information and the corresponding sample label is minimized, in other words, the loss function is minimized. For example, the loss function may be a minimum mean square error (mean square error, MSE) or a cosine similarity. The foregoing operations may be repeated to obtain an encoder and a decoder that meet a target requirement. The model training node may be a terminal device, an access network device, or another network element with an AI function in a communication system.

FIG. 6 is a diagram of AI model-based CSI feedback.

As shown in FIG. 6, a CSI generator is the foregoing encoder, and a CSI reconfigurator is the foregoing decoder. The CSI generator may be deployed in a terminal device, and the CSI reconfigurator may be deployed in a network device. The terminal device may generate CSI feedback information Z based on original CSI V by using the generator. The terminal device reports a CSI report, where the CSI report may indicate the CSI feedback information Z. The network device may reconstruct CSI information by using the CSI reconfigurator to obtain recovery CSI V'. The network device may perform downlink transmission by using a precoder corresponding to the recovery CSI V'.

The original CSI V may be obtained by the terminal device through CSI measurement. For example, the original CSI V may include an eigenmatrix of a downlink channel. The CSI generator processes the eigenmatrix of the downlink channel to obtain the CSI feedback information Z, namely, channel state indication information. In other words, the performing a compression operation and/or a quantization operation on the eigenmatrix based on a codebook in the foregoing descriptions is replaced with an operation of processing the eigenmatrix by the generator to obtain the CSI feedback information Z. The terminal device reports the CSI feedback information Z. The network device processes the CSI feedback information Z by using the CSI reconfigurator to obtain the recovery CSI V'. For example, the precoder corresponding to the recovery CSI V' may be the recovery CSI V'. In other words, the CSI reconfigurator may process the CSI feedback information Z and output the recovery CSI V', namely, the precoder. The precoder corresponding to the recovery CSI V' may alternatively be a precoder obtained by the network device by further processing V'. For example, the network device calculates a multi-user precoder based on V'.

Some CSI parameters (for example, a CQI and an SINR) are related to a precoder used by the network device. If the terminal device cannot learn of the precoder used by the network device, the terminal device cannot accurately calculate these CSI parameters. Consequently, a reported CSI parameter is inconsistent with actual channel quality, and a related configuration of the network device is affected.

The CQI is used below as an example for description.

Table 1 shows a part of a CQI table in a protocol. For example, as shown in Table 1, each CQI may be represented by four bits (bit), and each CQI may represent an MCS. Table 1 shows a plurality of modulation (modulation) schemes, for example, quadrature phase shift keying (quadrature phase shift keying, QPSK) and quadrature amplitude modulation (quadrature amplitude modulation, QAM).

Table 1

| CQI index (index) | Modulation (modulation) scheme | Code rate (code rate) × 1024 | Coding efficiency (efficiency) |
|---|---|---|---|
| 0 | Out of range (out of range) | | |
| 1 | QPSK | 78 | 0.1523 |

(continued)

| CQI index (index) | Modulation (modulation) scheme | Code rate (code rate) × 1024 | Coding efficiency (efficiency) |
|---|---|---|---|
| 2 | QPSK | 120 | 0.2344 |
| ... | ... | ... | ... |
| 15 | 64QAM | 948 | 5.5547 |

The terminal device may calculate the CQI in a plurality of manners. For example, the terminal device may calculate the CQI based on any one of the following: an SINR, a signal-to-noise ratio (signal-to-noise ratio, SNR), or RSRP.

A manner of determining the CQI is described below by using the SINR as an example.

The terminal device obtains channel measurement information and interference information through CSI measurement, and calculates an SINR value based on the channel measurement information and the interference information. The terminal device may search an SINR-block error rate (block error rate, BLER) or SINR-CQI table stored on the terminal device, and determine, based on the calculated SINR value, a CQI that needs to be reported.

The calculation of the SINR value is related to channel quality, interference information, noise power, reception algorithm of the terminal device, and the like. In addition, in multiple-input multiple-output (multiple-input multiple-output, MIMO), the SINR value is further related to the precoder used by the network device. If the precoder used by the network device matches a channel, for example, an amplitude value obtained by multiplying the channel by the precoder is large, an SINR value for reception of the terminal device may be increased. During the calculation of the SINR value, a precoder assumption used for the calculation needs to be determined, in other words, a precoder used for calculating the SINR needs to be assumed.

In NR, precoder assumptions in some CSI feedback modes are specified in a protocol. For example, when calculating the SINR value, the terminal device may assume that the precoder used by the network device is a precoder corresponding to a PMI reported by the terminal device. When a downlink channel and an interference status change slightly, the SINR value calculated by the terminal device based on the precoding value is approximately consistent with a real SINR value in a case in which the network device subsequently transmits data by using the precoder.

However, in some scenarios, the terminal device cannot learn of the precoder used by the network device, and a CQI reported by the terminal device may be inconsistent with actual channel quality. Consequently, a related configuration of the network device is affected.

For example, the terminal device may calculate the SINR based on the precoder corresponding to the reported PMI, but the network device may determine a precoder based on the PMI in another manner. In other words, the network device does not necessarily use the precoder corresponding to the PMI during a subsequent data transmission.

For example, in the AI model-based CSI feedback mode, a precoder subsequently used by the network device may be a precoder corresponding to recovery CSI. CSI feedback information is generated by using the CSI generator. When no CSI reconfigurator is deployed in the terminal device, the terminal device cannot obtain the precoder corresponding to the recovery CSI. In an implementation, the terminal device may calculate the CQI by using a precoder corresponding to original CSI that is not processed by an AI model. However, the recovery CSI obtained by using the CSI reconfigurator and the original CSI are not completely the same, and there is usually an error. A CQI calculated based on the precoder corresponding to the original CSI is inconsistent with actual channel quality. Consequently, a related configuration of the network device is affected. For example, the CQI calculated by the terminal device may exceed the actual channel quality, and an order of an MCS scheduled by the network device based on the CQI fed back by the terminal device may be excessively high. Consequently, a bit error rate of a downlink transmission is high. In another implementation, a CSI reconfigurator whose performance is the same as or similar to performance of the CSI reconfigurator on the network device side may be deployed in the terminal device. The terminal device may obtain, by using the reconfigurator, the precoder corresponding to the recovery CSI, namely, the precoder used by the network device, to calculate the CQI based on the precoder corresponding to the recovery CSI. However, in this manner, complexity and a performance requirement of the terminal device are increased. In addition, if the reconfigurator is a private model of the network device, a risk of privacy leakage may occur.

In view of this, this application provides a communication method and a communication apparatus, to enable a parameter value reported by a terminal device to accurately reflect real downlink channel quality.

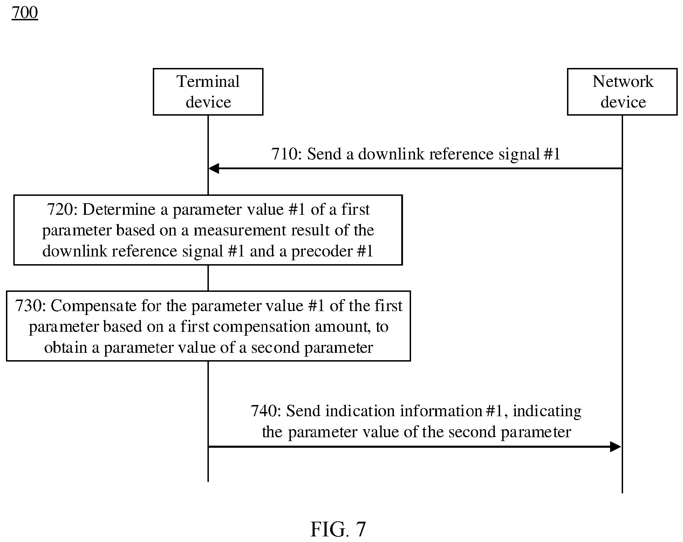

FIG. 7 is a schematic flowchart of a communication method according to this application. As shown in FIG. 7, the method 700 may include the following steps.

710: A network device sends a downlink parameter signal #1 (namely, a first downlink reference signal) to a terminal device.

720: The terminal device determines a parameter value #1 (namely, a first parameter value) of a first parameter based on a measurement result of the downlink reference signal #1 and a precoder #1 (namely, a first precoder). The first parameter reflects downlink channel quality.

730: The terminal device compensates for the parameter value #1 of the first parameter based on a first compensation amount, to obtain a parameter value of a second parameter. The first compensation amount indicates a difference between downlink channel quality in a case in which the network device uses the precoder #1 and downlink channel quality in a case in which the network device uses a precoder #2 (namely, a second precoder). The second parameter and the first parameter may be a same parameter. Alternatively, the second parameter may be another parameter that is different from the first parameter and that indicates downlink channel quality.

740: The terminal device sends indication information #1 (namely, first indication information) to the network device. The indication information #1 indicates the parameter value of the second parameter. Optionally, the indication information #1 may further indicate feedback information for channel information #1 (namely, first channel information). The feedback information for the channel information #1 is based on the measurement result of the downlink reference signal #1. The feedback information for the channel information #1 may also be referred to as channel state indication information #1. The feedback information for the channel information #1 corresponds to the precoder #2. Optionally, the feedback information for the channel information #1 is determined based on the channel information #1. The channel information #1 is based on the measurement result of the downlink reference signal #1.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

For example, the downlink reference signal #1 may include one or more of a CSI-RS, a demodulation reference signal (demodulation reference signal, DMRS), or the like.

Optionally, both the first parameter and the second parameter are used to determine one or more of a modulation scheme, a code rate, or coding efficiency. In other words, both the first parameter and the second parameter are related to one or more of the modulation scheme, the code rate, or the coding efficiency.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

Optionally, the first parameter and the second parameter may be a same parameter. The first parameter may include any one of the following: a CQI, an SINR, an SNR, RSRP, or the like.

In this case, the parameter value of the second parameter is a parameter value #2 of the first parameter, to be specific, a parameter value, obtained through compensation, of the first parameter.

When the first parameter and the second parameter are different parameters, the first parameter is a parameter that can be used to determine the second parameter. For example, the second parameter may be a CQI, and the first parameter may be a parameter used to calculate the CQI.

Optionally, the second parameter may include a CQI, and the first parameter may include an SINR, an SNR, RSRP, or the like.

For example, the parameter value of the second parameter that corresponds to the parameter value #2 of the first parameter may be determined through table lookup. To be specific, a parameter value of the second parameter that corresponds to a specific parameter value of the first parameter, for example, the parameter value #2 of the first parameter, is determined based on the specific parameter value of the first parameter and a correspondence between a parameter value of the first parameter and a parameter value of the second parameter.

In a first possible example, the feedback information for the channel information #1 may be obtained by performing a compression operation and/or a quantization operation on the channel information #1.

For example, the feedback information for the channel information #1 may be obtained by processing the channel information #1 by using an AI model. The AI model may be the model shown in FIG. 6. The feedback information for the channel information #1 may be obtained by processing the channel information #1 by using a CSI generator. Processing that may be performed by the CSI generator may be considered as the compression operation and/or the quantization operation. After receiving the feedback information for the channel information #1, the network device may process the feedback information for the channel information #1 by using a CSI reconfigurator, to obtain recovery information for the channel information #1. In this case, that the network device determines the precoder #2 based on the feedback information for the channel information #1 means that the network device determines the precoder #2 based on the recovery information for the channel information #1.

In a second possible example, the feedback information for the channel information #1 may be obtained by processing the channel information #1 by using a codebook. This case is applicable when a single-ended AI model exists on the network device side. The single-ended AI model is configured to recover the received feedback information for the channel information #1 to the corresponding channel information #1.

Alternatively, the feedback information for the channel information #1 may be determined in another manner. This is not limited in this embodiment of this application.

The terminal device receives the downlink reference signal #1, and performs measurement, to be specific, performs channel estimation, based on the downlink reference signal #1, to obtain the measurement result of the downlink reference signal #1.

The precoder #1 is a precoder used by the terminal device to calculate the parameter value #1 of the first parameter, in other words, a precoder assumed by the terminal device when the terminal device calculates the parameter value #1 of the first parameter.

For example, the downlink reference signal #1 may be a CSI-RS. The terminal device performs CSI measurement based on the CSI-RS, and determines the parameter value #1 of the first parameter based on a measurement result and an assumed precoder (the precoder #1).

A parameter value of the first parameter that is calculated by the terminal device may indicate downlink channel quality determined by the terminal device.

**In** step 730, the terminal device may determine the parameter value of the second parameter based on the first compensation amount and the parameter value #1 of the first parameter.

For example, the first compensation amount may be a compensation amount corresponding to the first parameter. The terminal device determines the parameter value #2 of the first parameter based on the first compensation amount and the parameter value #1 of the first parameter. The parameter value of the second parameter is based on the parameter value #2 of the first parameter.

It should be noted that the downlink channel quality in the case in which the network device uses the precoder #1 in step 730 may be understood as downlink channel quality calculated by the terminal device by assuming that the network device uses the precoder #1, but this does not necessarily indicate that the network device uses the precoder #1. The downlink channel quality in the case in which the network device uses the precoder #2 may be understood as downlink channel quality calculated by the terminal device by assuming that the network device uses the precoder #2, but this does not necessarily indicate that the network device uses the precoder #2. The first compensation amount may also be understood as a difference between downlink channel quality determined based on the precoder #1 and downlink channel quality determined based on the precoder #2.

For example, step 730 may include: The terminal device determines the parameter value of the second parameter based on a difference between or a sum value of the parameter value #1 of the first parameter and the first compensation amount. In other words, the difference between or the sum value of the parameter value #1 of the first parameter and the first compensation amount may be used as the parameter value #2 of the first parameter. The first compensation amount may be a positive value, a negative value, or 0. In a possible case, the first compensation amount is a value greater than or equal to 0, and the terminal device determines the parameter value of the second parameter based on a difference obtained by subtracting the first compensation amount from the parameter value #1 of the first parameter.

During actual application, a manner of a compensation operation may be adjusted according to a requirement. This is not limited in this embodiment of this application.

A CQI reported by the terminal device may be a wideband CQI or a subband CQI. The wideband CQI means that one CQI is shared within a bandwidth. The subband CQI means that each subband has a CQI, and there may be a plurality of CQIs within a bandwidth.

When the CQI reported by the terminal device is a subband CQI, the compensation in this embodiment of this application may be performed for a subband. In other words, in the method 700, a first compensation amount for a subband may be obtained, and a parameter value #1 of a first parameter of the subband is compensated for based on the first compensation amount, to obtain a parameter value of a second parameter of the subband. For example, both the first parameter and the second parameter are CQIs. In this case, a compensation amount for a CQI of each subband may be calculated, and the CQI of each subband is separately compensated for.

When the CQI reported by the terminal device is a wideband CQI, the compensation in this embodiment of this application may be performed for an entire bandwidth. In other words, in the method 700, a first compensation amount for an entire bandwidth may be obtained, and a parameter value #1 of a first parameter of the entire bandwidth is compensated for based on the first compensation amount, to obtain a parameter value of a second parameter of the entire bandwidth. For example, both the first parameter and the second parameter are CQIs. In this case, a compensation amount for a CQI of the entire bandwidth may be calculated, and the wideband CQI is compensated for based on the compensation amount. Alternatively, the compensation in this embodiment of this application may be performed for a subband, and a wideband CQI is determined based on a subband CQI obtained through compensation. For example, both the first parameter and the second parameter are CQIs. In this case, a compensation amount for a CQI of each subband may be calculated, the CQI of each subband is separately compensated for, and then a wideband CQI is calculated by using a plurality of subband CQIs obtained through compensation.

It should be understood that the first parameter and the second parameter may alternatively be other precode-related parameters, provided that the parameters can indicate downlink channel quality.

For example, the channel information #1 may be a channel eigenvector.

Alternatively, the channel information #1 may be a channel response.

Alternatively, the channel information #1 may be other information, provided that feedback information for the information can indicate a precoder.

The indication information #1 includes one piece of information, or may include a plurality of pieces of information. The parameter value of the second parameter and the feedback information for the channel information #1 may be indicated by same information in the indication information #1, or may be indicated by different information in the indication information #1. In addition, a plurality of pieces of information included in the indication information #1 may be carried in one or more messages.

For example, the downlink reference signal #1 may be a CSI-RS. After performing CSI measurement, the terminal device may generate a CSI report. The CSI report may indicate the parameter value of the second parameter and the feedback information for the channel information #1. The CSI report may be used as the indication information #1.

Alternatively, the indication information #1 may be information in another form. This is not limited in this embodiment of this application.

For example, the precoder #1 may be any precoder different from the precoder #2.

For example, the precoder #1 may be a precoder corresponding to the channel information #1. The precoder #1 may be a channel eigenvector corresponding to the channel information #1.

For example, the channel information #1 is a channel eigenvector. In this case, the precoder #1 is the channel information #1.

For another example, the channel information #1 is a channel response. In this case, the precoder #1 may be obtained through processing, such as eigen decomposition or singular value decomposition, on the channel information #1.

Alternatively, the precoder #1 may be a fixed value.

For example, the precoder #1 may be 1 or an identity matrix.

It should be understood that the foregoing precoder assumption manners are merely examples and do not constitute a limitation on the solution in this embodiment of this application. That the feedback information for the channel information #1 corresponds to the precoder #2 means that the network device may determine the precoder #2 based on the feedback information for the channel information #1.

According to the solution in this embodiment of this application, the first compensation amount may indicate a difference between downlink channel quality determined based on the precoder #1 and downlink channel quality determined based on the precoder #2. The terminal device determines the parameter value #1 of the first parameter based on the precoder #1, and compensates for the parameter value #1 of the first parameter based on the first compensation amount, so that a parameter value obtained through compensation can accurately reflect the downlink channel quality in the case in which the network device uses the precoder #2. This helps improve accuracy of a subsequent related configuration of the network device. In other words, in the solution in this embodiment of this application, even if the terminal device cannot learn of the precoder #2, compensation is performed to enable a parameter value fed back by the terminal device to accurately reflect the downlink channel quality in the case in which the network device uses the precoder #2.

Optionally, step 710 to step 740 are repeatedly performed.

The method 700 may be cyclically performed.

The first compensation amount is described below.

The first compensation amount may be determined based on a difference between downlink channel quality in a case in which the network device uses a precoder #3 (namely, a third precode) and downlink channel quality in a case in which the network device uses a precoder #4 (namely, a fourth precode). The precoder #3 is the same as the precoder #1, or the precoder #3 and the precoder #1 are generated in a same manner. The precoder #4 corresponds to feedback information for channel information #2 (namely, second channel information). The feedback information for the channel information #2 is based on a measurement result of a downlink reference signal #2 (namely, a second downlink reference signal). Optionally, the feedback information for the channel information #2 is determined based on the channel information #2, and the channel information #2 is based on the measurement result of the downlink reference signal #2 (namely, the second downlink reference signal).

In other words, the first compensation amount may indicate the difference between the downlink channel quality in the case in which the network device uses the precoder #3 and the downlink channel quality in the case in which the network device uses the precoder #4. The difference is considered as the difference between the downlink channel quality in the case in which the network device uses the precoder #1 and the downlink channel quality in the case in which the network device uses the precoder #2.

Specifically, the first compensation amount may be determined based on a difference between a parameter value #3 (namely, a second parameter value) of the first parameter and a parameter value #4 (namely, a third parameter value) of the first parameter. The parameter value #3 of the first parameter reflects the downlink channel quality in the case in which the network device uses the precoder #3. The parameter value #4 of the first parameter reflects the downlink channel quality in the case in which the network device uses the precoder #4.

The precoder #3 is a precoder used to calculate the parameter value #3 of the first parameter.

That the precoder #3 is the same as the precoder #1 and that the precoder #3 and the precoder #1 are generated in a same manner may be collectively referred to as that assumptions for the precoder #3 and the precoder #1 are the same.

For example, the precoder #3 and the precoder #1 may be a same fixed value.

For example, both the precoder #1 and the precoder #3 are 1.

For another example, both the precoder #1 and the precoder #3 are identity matrices.

Alternatively, the precoder #3 and the precoder #1 may be a same non-fixed value.

For example, the precoder #3 is a precoder corresponding to the channel information #2, and the precoder #1 is also a precoder corresponding to the channel information #2.

For a manner of determining a precoder corresponding to the channel information #2, refer to the precoder corresponding to the channel information #1 in the foregoing descriptions. Details are not described herein again.

That the precoder #3 and the precoder #1 are generated in a same manner may be understood as that the precoder #3 and the precoder #1 are generated according to a same rule.

For example, a precoder assumed during calculation of the parameter value #1 of the first parameter and a precoder assumed during calculation of the parameter value #3 of the first parameter are a precoder corresponding to channel information of the parameter value #1 and a precoder corresponding to channel information of the parameter value #3 respectively. The precoder #3 is a precoder corresponding to the channel information #2. The precoder #1 is a precoder corresponding to the channel information #1.

A manner of generating the feedback information for the channel information #2 is the same as a manner of generating the feedback information for the channel information #1. In other words, the feedback information for the channel information #2 and the feedback information for the channel information #1 are generated according to a same rule. The channel information #1 and the channel information #2 may be processed according to a same rule to obtain the feedback information for the channel information #1 and the feedback information for the channel information #2. For example, the channel information #2 is input to the CSI generator to obtain the feedback information for the channel information #2, and the channel information #1 is input to the CSI generator to obtain the feedback information for the channel information #1. For a manner of generating the feedback information for the channel information #2, refer to the feedback information for the channel information #1 in the foregoing descriptions. Details are not described herein again.

According to the solution in this embodiment of this application, because the precoder #3 and the precoder #1 are assumed in a same manner, a manner of calculating the downlink channel quality in the case in which the precoder #1 is used is the same as a manner of calculating the downlink channel quality in the case in which the precoder #3 is used, and the difference between the downlink channel quality in the case in which the network device uses the precoder #3 and the downlink channel quality in the case in which the network device uses the precoder #4 is similar to the difference between the downlink channel quality in the case in which the network device uses the precoder #1 and the downlink channel quality in the case in which the network device uses the precoder #2. In this way, the parameter value #1 of the first parameter is compensated for based on the difference between the downlink channel quality in the case in which the network device uses the precoder #3 and the downlink channel quality in the case in which the network device uses the precoder #4. Even if the terminal device cannot learn of the precoder #2, a parameter value fed back by the terminal device can accurately reflect the downlink channel quality in the case in which the network device uses the precoder #2.

Optionally, the terminal device uses the difference between the parameter value #3 of the first parameter and the parameter value #4 of the first parameter as the first compensation amount.

For example, the terminal device uses a difference between the parameter value #3 of the first parameter and the parameter value #4 of the first parameter as the first compensation amount.

Before step 730, the terminal device may further obtain the first compensation amount.

The terminal device may obtain the first compensation amount in a plurality of manners. For example, the terminal device may calculate the first compensation amount. For another example, the terminal device may receive indication information for the first compensation amount. Alternatively, the terminal device may obtain the first compensation amount in another manner.

An example manner of obtaining the first compensation amount by the terminal device is described below.

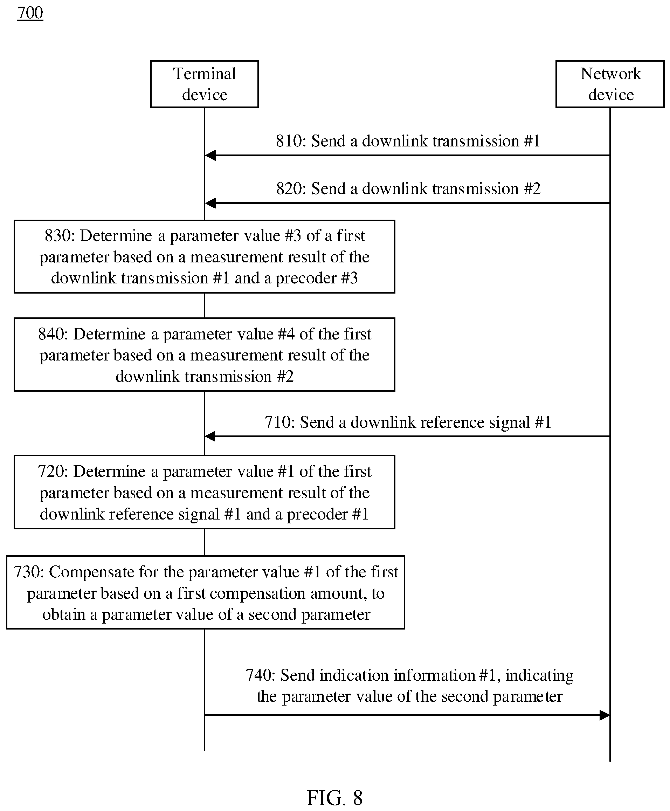

FIG. 8 is a schematic flowchart of another communication method according to an embodiment of this application.

In a possible implementation, the method 700 further includes the following steps, as shown in FIG. 8.

810: The network device sends a downlink transmission #1 (namely, a first downlink transmission) to the terminal device. The downlink transmission #1 is a downlink transmission that is not processed by using the precoder #4.

820: The network device sends a downlink transmission #2 (namely, a second downlink transmission) to the terminal device. The downlink transmission #2 is a downlink transmission processed by using the precoder #4.

A sequence of 810 and 820 may not be limited.

830: The terminal device determines the parameter value #3 of the first parameter based on a measurement result of the downlink transmission #1 and the precoder #3. The parameter value #3 of the first parameter reflects the downlink channel quality in the case in which the network device uses the precoder #3.

840: The terminal device determines the parameter value #4 of the first parameter based on a measurement result of the downlink transmission #2. The parameter value #4 of the first parameter reflects the downlink channel quality in the case in which the network device uses the precoder #4.

The downlink transmission #1 may be sent before the downlink reference signal #1. In other words, a receiving moment of the downlink reference signal #1 is later than a receiving moment of the downlink transmission #1.

For example, the downlink transmission #1 may be a downlink data transmission. For example, the downlink transmission #1 may be a physical downlink shared channel (physical downlink shared channel, PDSCH) transmission.

Alternatively, the downlink transmission #1 may be a downlink reference signal transmission. For example, the downlink transmission #1 may be a CSI-RS transmission or a DMRS transmission.

The terminal device receives the downlink transmission #1, and performs measurement, to be specific, performs channel estimation, based on the downlink transmission #1, to obtain the measurement result of the downlink transmission #1.

The downlink transmission #2 may be sent before the downlink reference signal #1. In other words, the receiving moment of the downlink reference signal #1 is later than a receiving moment of the downlink transmission #2.

For example, the downlink transmission #2 may be a downlink data transmission. For example, the downlink transmission #2 may be a PDSCH transmission.

Alternatively, the downlink transmission #2 may be a downlink reference signal transmission. For example, the downlink transmission #2 may be a CSI-RS transmission or a DMRS transmission.

The terminal device receives the downlink transmission #2, and performs measurement, to be specific, performs channel estimation, based on the downlink transmission #2, to obtain the measurement result of the downlink transmission #2.

The "not processed by using the precoder #4" in step 810 and the "processed by using the precoder #4" in step 820 are relative concepts. That the downlink transmission #2 is a downlink transmission processed by using the precoder #4 indicates a downlink transmission that is additionally processed by using the precoder #4 compared with the downlink transmission #1.

The downlink transmission #1 may be a downlink transmission processed by using a precoder other than the precoder #4, or the downlink transmission #1 may be a downlink transmission that is not processed by using any precoder. This is not limited in this embodiment of this application.

As described above, the precoder #4 is a precoder corresponding to the feedback information for the channel information #2, and the channel information #2 is based on the downlink reference signal #2. For example, the feedback information for the channel information #2 may be feedback information for channel information that is last received by the network device before the network device sends the downlink transmission #2. For example, the precoder #4 may be a precoder corresponding to a CSI report that is last received by the network device before the network device sends the downlink transmission #2. The CSI report may indicate the feedback information for the channel information #2. The precoder corresponding to the CSI report is a precoder corresponding to feedback information for channel information that is indicated by the CSI report.

In a possible implementation, the downlink transmission #1 is the downlink reference signal #2. The following provides descriptions based on this case.

The network device may send the downlink reference signal #2 to the terminal device. The terminal device determines the channel information #2 based on the measurement result of the downlink reference signal #2. The terminal device processes the channel information #2 to obtain the feedback information for the channel information #2, and sends the feedback information for the channel information #2 to the network device. The network device sends the downlink transmission #2 by using the precoder (namely, the precoder #4) corresponding to the feedback information for the channel information #2.

There is a specific time interval between a moment at which the terminal device reports the feedback information for the channel information #2 and a moment at which the network device performs downlink transmission by using the precoder #4 (in other words, the precoder #4 takes effect). The terminal device determines specific downlink transmissions in which the precoder #4 is used. In other words, the terminal device determines, from downlink transmissions sent by the network device, a downlink transmission for calculating the parameter value #4 of the first parameter, that is, the downlink transmission #2.

Optionally, the terminal device receives the downlink transmission #2 in a first time period. A downlink transmission in the first time period is a downlink transmission in which the precoder #4 is used.

The terminal device receives the downlink transmission #2 in the first time period. In other words, the terminal device measures the downlink transmission #2 in the first time period.

A downlink transmission measured by the terminal device in the first time period may be used as the downlink transmission #2.

The first time period is within an effective period of the precoder (namely, the precoder #4) corresponding to the feedback information for the channel information #2. The effective period of the precoder #4 is a period in which the network device performs downlink transmission by using the precoder #4.

For example, the first time period is a time period after a first moment. The first moment is determined based on a moment at which the feedback information for the channel information #2 is sent and a first time offset.

The moment at which the terminal device sends the feedback information for the second **channel** information may be a start moment or an end moment at which the feedback information for the channel information #2 is sent.

The first time offset may be predefined, or the first time offset may be indicated by the network device.

The first moment may be a moment at which the precoder #4 takes effect or another moment within the effective period of the precoder #4. The terminal device may start to measure a downlink transmission at the first moment. In this case, the downlink transmission measured by the terminal device may be used as the downlink transmission #2.

The first moment may be $t + \Delta t1$. The terminal device may start to measure a downlink transmission at $t + \Delta t1$, to determine the parameter value #4 of the first parameter. t represents the start moment or the end moment at which the feedback information for the channel information #2 is sent. $\Delta t1$ represents the first time offset.

For another example, the first time period is a time period between a second moment and a third moment. The second moment is determined based on a moment at which the feedback information for the channel information #2 is sent and a second time offset.

The second time offset may be predefined, or the second time offset may be indicated by the network device.

The third moment may be determined based on a moment at which the feedback information for the channel information #2 is sent and a third time offset. The second time offset is different from the third time offset.

The third time offset may be predefined, or the third time offset may be indicated by the network device.

The second moment may be $t + \Delta t2$, and the third moment may be $t + \Delta t3$. The terminal device may measure a downlink transmission during a period between $t + \Delta t2$ and $t + \Delta t3$, to determine the parameter value #4 of the first parameter. $\Delta t2$ represents the second time offset. $\Delta t3$ represents the third time offset.

Alternatively, the third moment may be determined based on the second moment and a fourth time offset.

The fourth time offset may be predefined, or the fourth time offset may be indicated by the network device.

The second moment may be $t + \Delta t2$, and the third moment may be $t + \Delta t2 + \Delta t4$. The terminal device may measure a downlink transmission during a period between $t + \Delta t2$ and $t + \Delta t2 + \Delta t4$, to determine the parameter value #4 of the first parameter. $\Delta t4$ represents the fourth time offset.

The terminal device may measure a downlink transmission in a time window between the second moment and the third moment. In this case, the downlink transmission measured by the terminal device may be used as the downlink transmission #2.

It should be understood that the foregoing descriptions are merely examples and do not constitute a limitation on the solution in this embodiment of this application. The terminal device may alternatively determine the downlink transmission #2 in another manner. For example, the network device may directly indicate the downlink transmission #2.

In another possible implementation, the downlink transmission #1 is different from the downlink reference signal #2. The following provides descriptions based on this case.

The downlink transmission #2 may be sent before or after the downlink transmission #1. Alternatively, the downlink transmission #1 and the downlink transmission #2 may be simultaneously sent.

The terminal device determines, from downlink transmissions sent by the network device, two downlink transmissions for calculating the parameter value #3 of the first parameter and the parameter value #4 of the first parameter, that is, the downlink transmission #1 and the downlink transmission #2.

Optionally, there is an association relationship #1 (namely, a first association relationship) between the downlink transmission #1 and the downlink transmission #2. In this case, the terminal device determines two downlink transmissions having the association relationship #1, to calculate the parameter value #3 of the first parameter and the parameter value #4 of the first parameter based on the two downlink transmissions.

The association relationship #1 may be predefined, or may be configured by the network device.

Optionally, the association relationship #1 includes a channel-associated relationship.

In other words, the downlink transmission #1 and the downlink transmission #2 may be channel-associated downlink transmissions.

For example, the downlink transmission #1 and the downlink transmission #2 are reference signals of a same PDSCH.

For example, the downlink transmission #1 and the downlink transmission #2 may be DMRSs of a same PDSCH. In this case, the terminal device may use DMRSs of a same PDSCH as the downlink transmission #1 and the downlink transmission #2.

Optionally, the association relationship #1 includes an association relationship between downlink transmission resources.

In other words, a resource for the downlink transmission #1 may be associated with a resource for the downlink transmission #2.

Associated downlink transmission resources may be predefined, or may be configured by the network device.

For example, the downlink transmission #1 is a downlink reference signal closest to the downlink transmission #2.

For example, a CRI-RS transmission closest to the downlink transmission #2 is predefined as the downlink transmission #1. The downlink transmission #2 may be determined in the foregoing manners. The terminal device may determine the downlink transmission #2 in the foregoing manners, and use a CRI-RS transmission closest to the downlink transmission #2 as the downlink transmission #1.

Alternatively, the association relationship #1 includes a relative relationship, for example, a time domain offset, between a resource for the downlink transmission #1 and a resource for the downlink transmission #2.

For example, the network device may configure a time domain offset between a resource for the downlink transmission #1 and a resource for the downlink transmission #2. **In** this case, the terminal device may use two downlink transmissions that meet the time domain offset as the downlink transmission #1 and the downlink transmission #2.

It should be understood that the foregoing descriptions are merely examples, and the terminal device may alternatively determine the downlink transmission #1 and the downlink transmission #2 in another manner. For example, the network device may send indication information to the terminal device. The indication information may indicate two associated downlink transmissions. The two associated downlink transmissions are the downlink transmission #1 and the downlink transmission #2. For another example, the indication information may directly indicate the downlink transmission #1 and the downlink transmission #2.

The terminal device determines the first compensation amount based on the difference between the parameter value #3 of the first parameter and the parameter value #4 of the first parameter.

Optionally, the terminal device uses the difference between the parameter value #3 of the first parameter and the parameter value #4 of the first parameter as the first compensation amount.

For example, the terminal device uses a difference between the parameter value #3 of the first parameter and the parameter value #4 of the first parameter as the first compensation amount.

The difference between the parameter value #3 of the first parameter and the parameter value #4 of the first parameter may be considered as one difference.

The terminal device may use the difference as the first compensation amount. Alternatively, the terminal device may use a plurality of differences as the first compensation amount.

Optionally, the terminal device determines the first compensation amount based on a plurality of differences. The plurality of differences include the difference between the parameter value #3 of the first parameter and the parameter value #4 of the first parameter.

Two parameter values (for example, the parameter value #3 and the parameter value #4) of the first parameter may be obtained in the foregoing steps (to be specific, step 810, step 820, step 830, and step 840), and then a difference between the two parameter values is determined. A difference obtained by performing the foregoing steps each time may be considered as one difference. N differences may be obtained by repeatedly performing the foregoing steps (to be specific, step 810, step 820, step 830, and step 840) for N times. Then the first compensation amount is determined based on the N differences. In other words, the first compensation amount is a function of the N differences. N is an integer greater than 1. During the N times of execution, the precoder #4 may be the same, or may vary.

For example, the determining the first compensation amount based on a plurality of differences may include: using an average value of the plurality of differences as the first compensation amount. In other words, the first compensation amount is averaging function of the plurality of differences.

For another example, the determining the first compensation amount based on a plurality of differences may include: using a filtering result for the plurality of differences as the first compensation amount. In other words, the first compensation amount is a filtering function of the plurality of differences.

The first compensation amount is determined based on the plurality of differences. This helps improve accuracy of the compensation amount, so that a fed-back parameter value can more accurately reflect the downlink channel quality in the case in which the network device uses the precoder #2.

For examples of step 810 to step 840, refer to a manner 1 and a manner 2 in the following descriptions.

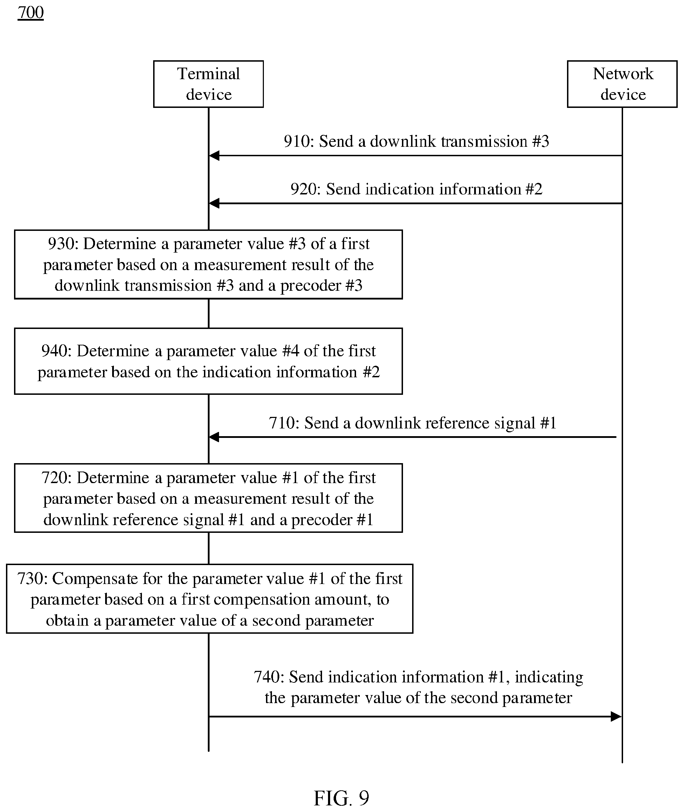

FIG. 9 is a diagram of still another communication method according to an embodiment of this application.

In a possible implementation, the method 700 further includes the following steps, as shown in FIG. 9.

910: The network device sends a downlink transmission #3 (namely, a third downlink transmission) to the terminal device. The downlink transmission #3 is a downlink transmission that is not processed by using the precoder #4.

920: The network device sends indication information #2 (namely, second indication information) to the terminal device. The indication information #2 indicates the precoder #4.

A sequence of 910 and 920 may not be limited.

930: The terminal device determines the parameter value #3 of the first parameter based on a measurement result of the downlink transmission #3 and the precoder #3.

940: The terminal device determines the parameter value #4 of the first parameter based on the indication information #2.

It should be understood that, in step 940, the terminal device may determine the parameter value #4 of the first parameter based on the indication information #2 and a measurement result of any downlink transmission.

Optionally, the any downlink transmission may be the downlink transmission #3, or the indication information #2 (for example, a transmission carrying the indication information #2), or a downlink transmission other than the downlink transmission #3 or the indication information #2. This is not limited herein.

The downlink transmission #3 may be sent before the downlink reference signal #1. In other words, a receiving moment of the downlink reference signal #1 is later than a receiving moment of the downlink transmission #3.

For example, the downlink transmission #3 may be a downlink data transmission. For example, the downlink transmission #3 may be a PDSCH transmission.

Alternatively, the downlink transmission #3 may be a downlink reference signal transmission. For example, the downlink transmission #3 may be a CSI-RS transmission or a DMRS transmission.

For example, the network device may send indication information to the terminal device, to indicate the downlink transmission #3.

The terminal device receives the downlink transmission #3, and performs measurement, to be specific, performs channel estimation, based on the downlink transmission #3, to obtain the measurement result of the downlink transmission #3.

A receiving moment of the indication information #2 is earlier than a receiving moment of the downlink transmission #1. In other words, the indication information #2 may be sent before the downlink reference signal #1.

The downlink transmission #3 may be sent before or after the indication information #2. Alternatively, the downlink transmission #3 and the indication information #2 may be simultaneously sent. The numbers of step 910 and step 920 do not constitute a limitation on an execution sequence.

Optionally, the downlink transmission #3 may be the downlink reference signal #2.

The terminal device determines the first compensation amount based on the difference between the parameter value #3 of the first parameter and the parameter value #4 of the first parameter.

Optionally, the terminal device uses the difference between the parameter value #3 of the first parameter and the parameter value #4 of the first parameter as the first compensation amount.

For example, the terminal device uses a difference between the parameter value #3 of the first parameter and the parameter value #4 of the first parameter as the first compensation amount.

The difference between the parameter value #3 of the first parameter and the parameter value #4 of the first parameter may be considered as one difference.

The terminal device may use the difference as the first compensation amount. Alternatively, the terminal device may use a plurality of differences as the first compensation amount.

Optionally, the terminal device determines the first compensation amount based on a plurality of differences. The plurality of differences include the difference between the parameter value #3 of the first parameter and the parameter value #4 of the first parameter.

Two parameter values (for example, the parameter value #3 and the parameter value #4) of the first parameter may be obtained in the foregoing steps (to be specific, step 910 to step 940), and then a difference between the two parameter values is determined. A difference obtained by performing the foregoing steps each time may be considered as one difference. N differences may be obtained by repeatedly performing the foregoing steps (to be specific, step 910 to step 940) for N times. Then the first compensation amount is determined based on the N differences. In other words, the first compensation amount is a function of the N differences. N is an integer greater than 1. During the N times of execution, the precoder #4 may be the same, or may vary.

Step 920 may be periodically performed. Alternatively, step 920 may be performed as determined by the network device. For example, the network device performs step 920 when learning that a parameter value of the second parameter in a previously reported CSI report is a parameter value not compensated for.

Optionally, the indication information #2 may indicate recovery information for the channel information #2, and the recovery information for the channel information #2 is determined based on the feedback information for the channel information #2.

As described above, the precoder #4 may be a precoder corresponding to the feedback information for the channel information #2. For example, the precoder (namely, the precoder #4) corresponding to the feedback information for the channel information #2 may be the recovery information for the channel information #2. The indication information #2 may indicate the precoder #4 by indicating the recovery information for the channel information #2.

For example, CSI feedback may be implemented based on an AI model.

Optionally, the recovery information for the channel information #2 is obtained by processing the feedback information for the channel information #2 by using a CSI reconfigurator. The feedback information for the channel information #2 is obtained by processing the channel information #2 by using a CSI generator.

Channel information is in a one-to-one correspondence with recovery information for the channel information. The terminal device may monitor performance of the AI model based on a difference between channel information and corresponding recovery information for the channel information. The foregoing correspondence exists between the channel information #2 and the recovery information for the channel information #2. The terminal device may determine a difference between the recovery information for the channel information #2 and the channel information #2, to monitor performance of the CSI generator and the CSI reconfigurator.

Optionally, the method 700 may further include: The terminal device sends indication information to the network device, where the indication information indicates the performance of the CSI reconfigurator and the CSI generator, and the performance is based on the difference between the recovery information for the channel information #2 and the channel information #2. For specific descriptions, refer to a method 1600 in the following descriptions. Details are not described herein.

For related descriptions of step 910 to step 940, refer to a manner 3 and a manner 4 in the following descriptions.

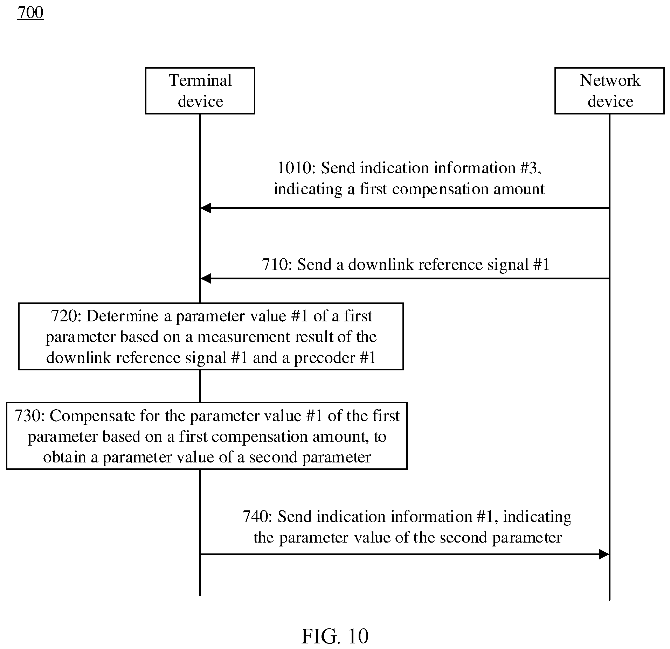

FIG. 10 is a diagram of still another communication method according to an embodiment of this application.

In a possible implementation, the method 700 further includes the following steps.

1010: The network device sends indication information #3 (namely, third indication information) to the terminal device. The indication information #3 indicates the first compensation amount.

The network device may notify the terminal device of the first compensation amount.

That the indication information #3 indicates the first compensation amount means that the terminal device may determine the first compensation amount based on the indication information #3.

The indication information #3 may be sent before or after the downlink reference signal #1. Alternatively, the indication information #3 and the downlink reference signal #1 may be simultaneously sent.

The network device may obtain the first compensation amount in a plurality of manners.

For example, CSI feedback may be implemented based on an AI model. The AI model may be obtained through training. The first compensation amount may be calculated based on a related dataset of the AI model. The related dataset of the AI model may include a training dataset for training the AI model, or the related dataset of the AI model may include a verification dataset for verifying the AI model. Alternatively, the AI model may further include a test dataset for testing the AI model.

The AI model may meet the following formula:

$$V' = F(G(V)),$$

where

F() is a CSI reconfigurator, and G() is a CSI generator.

For example, an input V for the CSI generator G() may be sample channel information, and an output V' of the CSI reconfigurator F() may be recovery information for the sample channel information.

Alternatively, the input V for the CSI generator G() may be a precoder corresponding to sample channel information, and the output V' of the CSI reconfigurator F() may be a precoder corresponding to recovery information for the sample channel information.

The first compensation amount is calculated based on the precoder corresponding to the sample channel information and the precoder corresponding to the recovery information for the sample channel information. To be specific, a difference between a parameter value of the first parameter that is calculated based on a precoder corresponding to recovery information for one or more pieces of sample channel information and a parameter value of the first parameter that is calculated based on a precoder corresponding to the sample channel information may be used as the first compensation amount. Alternatively, a difference between a parameter value of the first parameter that is calculated based on a precoder corresponding to recovery information for sample channel information and a parameter value of the first parameter that is calculated based on another assumed precoder may be used as the first compensation amount. An assumption manner is the same as a precoder assumption manner used during calculation of the parameter value #1 of the first parameter. Alternatively, the network device may obtain the first compensation amount in another manner. This is not limited in this embodiment of this application.

For related descriptions of step 1010, refer to a manner 5 in the following descriptions.

Optionally, the method 700 may further include: The terminal device sends indication information #4 (namely, fourth indication information) to the network device. The indication information #4 indicates at least one of the following: that the parameter value of the second parameter is obtained through compensation, the first compensation amount, a manner of calculating the first compensation amount, or a data source on which calculation of the first compensation amount depends. The data source includes one or more of a precoder, a downlink channel, or a downlink reference signal that is indicated.

The terminal device may notify the network device of whether the reported parameter value of the second parameter is a parameter value obtained through compensation, and/or a degree of compensation, for example, the first compensation amount.

The indicating a data source on which calculation of the first compensation amount depends may be understood as indicating a specific precoder, downlink channel, or downlink reference signal based on which the terminal device calculates a compensation amount.

For example, the data source on which calculation of the first compensation amount depends may include the first downlink transmission and the second downlink transmission. The first downlink transmission may be the second downlink reference signal. The second downlink transmission may be a PDSCH transmission or a PDCCH transmission. In other words, the fourth indication information may indicate to determine the first compensation amount based on the first downlink reference signal and the second downlink transmission.

For example, the data source on which calculation of the first compensation amount depends may include the second indication information and the third downlink transmission. The third downlink transmission may be the second downlink reference signal. The second indication information indicates a precoder. In addition, the second indication information is also a type of downlink transmission. Both the second indication information and the third downlink transmission may be used to obtain a measurement result. In other words, the fourth indication information may indicate to determine the first compensation amount based on the precoder indicated by the second indication information and measurement results for the second indication information and the third downlink transmission.

For example, the data source may be indicated in the following manner: an identifier of a precoder, an identifier of a downlink channel, or an identifier of a downlink reference signal.

For example, when the first compensation amount is calculated based on the first downlink transmission and the second downlink transmission, the fourth indication information may indicate an identifier of the first downlink transmission and an identifier of the second downlink transmission, to notify the network device that the first compensation amount is determined based on data sources with the two identifiers.

Alternatively, the data source may be indicated in the following manner: a sending moment for a precoder, a sending moment for a downlink channel, or a sending moment for a downlink reference signal.

The moment may be represented by a symbol, a slot, or a subframe.

For example, when the first compensation amount is calculated based on the second indication information and the third downlink transmission, the fourth indication information may indicate a sending moment for the second indication information and a sending moment for the third downlink transmission, to notify the network device that the first compensation amount is determined based on data sources whose sending moments are the two moments.

Optionally, the method 700 may further include: The network device sends indication information #5 (namely, fifth indication information) to the terminal device. The indication information #5 indicates at least one of the following: that the terminal device is to perform compensation, a manner of calculating the first compensation amount, or a data source on which calculation of the first compensation amount depends. The data source includes one or more of a precoder, a downlink channel, or a downlink reference signal that is indicated.

For example, the data source may be indicated in the following manner: an identifier of a precoder, an identifier of a downlink channel, or an identifier of a downlink reference signal.

For example, when the first compensation amount is calculated based on the first downlink transmission and the second downlink transmission, the fifth indication information may indicate an identifier of the first downlink transmission and an identifier of the second downlink transmission, so that the terminal device can determine the first compensation amount based on data sources with the two identifiers.

Alternatively, the data source may be indicated in the following manner: a sending moment for a precoder, a sending moment for a downlink channel, or a sending moment for a downlink reference signal.

The moment may be represented by a symbol, a slot, or a subframe.

For example, when the first compensation amount is calculated based on the second indication information and the third downlink transmission, the fifth indication information may indicate a sending moment for the second indication information and a sending moment for the third downlink transmission, so that the terminal device can determine the first compensation amount based on data sources whose sending moments are the two moments.

For example, after receiving the indication information #5, the terminal device may perform the method 700, in other words, perform step 730 and step 740.

The indication information #5 and the indication information #2 may be same indication information or different indication information.

The indication information #5 and the indication information #3 may be same indication information or different indication information.

This can avoid excessive compensation caused by repeatedly compensating for the parameter value of the second parameter by the terminal device and the network device.

Optionally, the method 700 further includes: The terminal device sends sixth indication information to the network device, where the sixth indication information indicates a capability of the terminal device to support compensation.

The capability of the terminal device to support compensation may also be referred to as a compensation capability of the terminal device.

For example, the capability of the terminal device to support compensation may include: whether the terminal device can perform compensation. The sixth indication information may indicate whether the terminal device supports compensation.

For example, the capability of the terminal device to support compensation may include a compensation manner supported by the terminal device. The sixth indication information may indicate a manner, supported by the terminal device, of performing compensation. For example, the sixth indication information may indicate a manner, supported by the terminal device, of calculating the first compensation amount.

The following describes the solutions in embodiments of this application by using five manners (a manner 1, a manner 2, a manner 3, a manner 4, and a manner 5) as examples. For ease of understanding, in the following five manners, the solutions in embodiments of this application are described by using an example in which a first parameter is an SINR and a second parameter is a CQI, but this does not constitute a limitation on the solutions in embodiments of this application. For example, when the second parameter is a CQI, the first parameter may alternatively be RSRP, an SNR, or the like. For specific descriptions of the first parameter and the second parameter, refer to the foregoing descriptions. Details are not described herein again.

Manner 1:

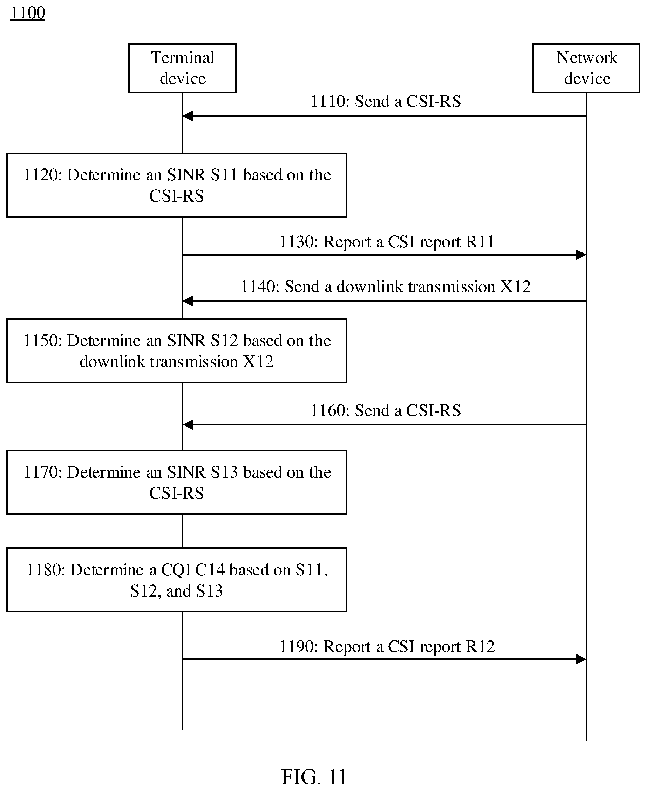

FIG. 11 is a schematic flowchart of a communication method according to an embodiment of this application. As shown in FIG. 11, the method 1100 includes the following steps.

1110: A network device sends a downlink reference signal #11 (an example of the downlink transmission #1), for example, a CSI-RS shown in FIG. 11.

1120: A terminal device determines a parameter value S11 of an SINR (an example of the parameter value #3 of the first parameter) based on the downlink reference signal #11.

The terminal device may perform CSI measurement based on the downlink reference signal #11, and determine the parameter value S11 of the SINR based on a measurement result. Optionally, the terminal device may further determine channel information K11 (an example of the channel information #2) based on the measurement result. In this case, the channel information K11 may also be referred to as CSI-related information K11, and may be used to generate a precoder.

During calculation of S11, a precoder needs to be assumed. In other words, S11 is related to an assumed precoder (an example of the precoder #3).

For example, S11 may meet the following formula:

$$S_{11} = \frac{\|gHW_{11}\|^2}{I}.$$

$S_{11}$ represents the parameter value S11 of the SINR. g represents a receiving weight of the terminal device. The receiving weight may also be referred to as a receiving precoder, a receiving vector, or the like. H represents a channel response. I represents interference. I may include only interference or may include interference and noise. $W_{11}$ represents a precoder W11 assumed by the terminal device when the terminal device calculates S11. $\|\ \|$ represents a norm.

A precoder assumption manner may be predefined, or may be configured by the network device, or may be determined by the terminal device. In other words, an assumption manner used by the terminal device to determine a precoder may be predefined, or may be indicated by the network device, or may be determined by the terminal device.

For example, W11 may be a precoder corresponding to the channel information K11. The precoder corresponding to the channel information K11 may be understood as a channel eigenvector corresponding to the channel information K11.

For example, the channel information K11 may be a channel eigenvector. In this case, W11 is the channel information K11, in other words, W11=K11.

For another example, the channel information K11 may be a channel response. In this case, W11 may be obtained by performing eigen decomposition or singular value decomposition on K11.

Alternatively, W11 may be a preset fixed value.

For example, W11 may be 1 or an identity matrix.

It should be understood that the foregoing precoder assumption manners are merely examples and do not constitute a limitation on the solution in this embodiment of this application.

Further, the terminal device may determine a CQI C11 based on S11.

For example, the terminal device may determine, through table lookup, C11 corresponding to S11.

1130: The terminal device reports a CSI report R11. The CSI report R11 indicates feedback information Z11 for the channel information K11.

The feedback information Z11 for the channel information K11 is determined based on the channel information K11. For example, the feedback information Z11 for the channel information K11 may be understood as being obtained by compressing and/or quantizing the channel information K11.

The terminal device may determine Z11 in a plurality of manners.

For example, the terminal device may process the channel information K11 by using a generator, to obtain the feedback information Z11 for the channel information K11.

Alternatively, the terminal device may process the channel information K11 by using a codebook, to obtain the feedback information Z11 for the channel information K11.

Further, the CSI report R11 may further indicate the CQI C11.

1140: The network device sends a downlink transmission X12 (an example of the downlink transmission #2) based on a precoder W12 (an example of the precoder #4) corresponding to the CSI report R11.

The downlink transmission X12 is a downlink transmission processed by using the precoder W12 corresponding to the CSI report R11.

For example, the downlink transmission X12 may be a downlink data transmission, for example, a PDSCH transmission. Alternatively, the downlink transmission X12 may be a downlink reference signal transmission, for example, a DMRS transmission or a CSI-RS transmission.

The CSI report R11 indicates the feedback information Z11 for the channel information K11. The precoder W12 corresponding to the CSI report R11 is a precoder corresponding to the feedback information Z11 for the channel information K11, or may be understood as a precoder W12 corresponding to recovery information K11' for the channel information K11. The recovery information K11' for the channel information K11 is determined based on the feedback information Z11 for the channel information K11.

For example, the network device may process the feedback information Z11 for the channel information K11 by using a reconfigurator, to obtain the recovery information K11' for the channel information K11.

The network device may determine the recovery information K11' for the channel information K11 based on the feedback information Z11 for the channel information K11, and then determine the corresponding precoder W12 based on the recovery information K11' for the channel information K11.

The network device may determine the precoder W12 in a plurality of manners.

For example, the precoder W12 corresponding to the recovery information K11' for the channel information K11 may be understood as a channel eigenvector corresponding to the recovery information K11' for the channel information K11.

For example, the recovery information K11' for the channel information K11 may be a channel eigenvector. In this case, the precoder W12 is the recovery information K11' for the channel information K11, in other words, W12=K11'.

For another example, the recovery information K11' for the channel information K11 may be a channel response. In this case, W12 may be obtained by performing eigen decomposition or singular value decomposition on K11'.

Alternatively, the network device may calculate W12 based on a precoding algorithm and the recovery information K11' for the channel information K11. For example, the precoding algorithm may include a zero forcing (zero forcing, ZF) precoding algorithm or a minimum mean square error (minimum mean square error, MMSE) precoding algorithm.

1150: The terminal device may determine an SINR S12 (an example of the parameter value #4 of the first parameter) based on the downlink transmission X12.

The terminal device may measure the downlink transmission X12 and calculate the SINR S12 based on a measurement result.

For example, S12 may meet the following formula:

$$S_{12} = \frac{\left\lVert gH_{12} \right\rVert^2}{I} .$$

g represents a receiving weight of the terminal device. I represents interference. $S_{12}$ represents a parameter value S12 of the SINR. $H_{12}$ is an equivalent channel measurement result obtained by the terminal device by measuring the downlink transmission X12. $\lVert \cdot \rVert$ represents a norm, for example, a Frobenius (Frobenius) norm or a 2-norm. $H_{12}$ includes a downlink channel response H and the precoder W12, for example, $H_{12} = HW12$.

The following describes an example manner of determining the downlink transmission X12 by the terminal device.

For example, the terminal device may measure a downlink transmission in a first time period, and calculate the SINR S12 based on a measurement result. The downlink transmission in the first time period is a downlink transmission in which the precoder W12 is used. The downlink transmission measured in the first time period may be considered as the downlink transmission X12.

For example, the first time period may be a time period after a first moment. The first moment may be $t + \Delta t1$. The terminal device may start to measure a downlink transmission at $t + \Delta t1$, to determine the SINR S12. t represents a start moment or an end moment at which the CSI report R11 is sent. $\Delta t1$ represents a first time offset. $\Delta t1$ may be predefined, or may be indicated by the network device.

For another example, the first time period may be a time period between a second moment and a third moment. The second moment may be $t + \Delta t2$, and the third moment may be $t + \Delta t3$. The terminal device may measure a downlink transmission during a period between $t + \Delta t2$ and $t + \Delta t3$, to determine the SINR S12. t represents a start moment or an end moment at which the CSI report R11 is sent. $\Delta t2$ represents a second time offset. $\Delta t3$ represents a third time offset. $\Delta t2$ may be predefined, or may be indicated by the network device. $\Delta t3$ may be predefined, or may be indicated by the network device.

It should be understood that the terminal device may alternatively determine the downlink transmission X12 in another manner. For specific descriptions, refer to the foregoing descriptions about the downlink transmission #2. Details are not described herein again.

1160: The network device sends a downlink reference signal #12 (an example of the downlink reference signal #1), for example, a CSI-RS shown in FIG. 11.

1170: The terminal device determines an SINR S13 (an example of the parameter value #1 of the first parameter) based on the downlink reference signal #12.

The terminal device may perform CSI measurement based on the downlink reference signal #12, and determine the parameter value S13 of the SINR based on a measurement result. Optionally, the terminal device may further determine channel information K12 (an example of the channel information #1) based on the measurement result. In this case, the channel information K12 may also be referred to as CSI-related information K12, and may be used to generate a precoder.

During calculation of S13, a precoder needs to be assumed. In other words, S13 is related to an assumed precoder. For a specific process of calculating S13, refer to step 1120. A precoder assumption manner used during calculation of S13 is the same as the precoder assumption manner used during calculation of S11.

That precoder assumption manners are the same may be understood as that precodes are determined according to a same rule or precodes are the same.

For example, a precoder W13 (an example of the precoder #1) assumed during calculation of S13 is the same as the precoder W11 assumed during calculation of S11.

For example, the precoder W11 may be a precoder corresponding to the channel information K11, and the precoder W13 may be a precoder corresponding to the channel information K11.

For another example, the precoder W11 is 1, and the precoder W13 is 1.

For another example, the precoder W11 is an identity matrix, and the precoder W13 is an identity matrix.

For example, the precoder W13 assumed during calculation of S13 and the precoder assumed during calculation of S11 are determined according to a same rule.

For example, a precoder assumed during calculation of an SINR value may be a precoder corresponding to channel information. The precoder W11 may be a precoder corresponding to the channel information K11, and the precoder W13 may be a precoder corresponding to channel information K12.

1180: The terminal device determines a CQI C14 (an example of the parameter value of the second parameter) based on S11, S12, and S13.

Step 1180 corresponds to step 730 and step 740 in the method 700.

S11 may be understood as an SINR value calculated based on a precoder assumed by the terminal device. S12 may be understood as an SINR value calculated based on a precoder actually used by the network device. A difference between channel quality in a case in which the assumed precoder W11 is used and channel quality in a case in which the actual precoder W12 is used may be calculated based on S11 and S12.

For example, an SINR difference (an example of the first compensation amount) may be determined based on S11 and S12.

The SINR difference may be expressed as a function of S11 and S12. To be specific, the SINR difference is as follows: $\Delta S_1 = f(S_{11}, S_{12})$. For example, $\Delta S_1 = S_{11} - S_{12}$.

When the precoder assumption manner used during calculation of S13 is the same as the precoder assumption manner used during calculation of S11, it can be considered that the SINR difference may indicate a difference between channel quality in a case in which the network device uses a precoder corresponding to the feedback information Z12 for the channel information K12 and channel quality in a case in which the network device uses the assumed precoder W13.

For example, $\Delta S_1 = S_{11} - S_{12}.S_{13} - \Delta S_1$ may indicate the channel quality in the case in which the network device uses the precoder corresponding to the feedback information Z12 for the channel information K12. $S_{13}$ represents the parameter value S13 of the SINR.

The CQI C14 may be determined based on the SINR difference and S13.

For example, $\Delta S_1 = S_{11} - S_{12}$. C14 may be determined based on $S_{13} - \Delta S_1$. For example, the CQI C14 corresponding to $S_{13} - \Delta S_1$ may be determined through table lookup.

The terminal device may determine the CQI C14 based on the SINR difference. For example, the downlink signal #11 may be a downlink signal #11 closest to a current moment, and the downlink transmission X12 may be a downlink transmission in which the precoder W12 is used and that is closest to the current moment.

Alternatively, the terminal device may determine the CQI C14 based on a plurality of SINR differences obtained through a plurality of times of measurement. For example, the terminal device may perform step 1110 to step 1150 for a plurality of times to obtain S11 and S12, to calculate a plurality of SINR differences. The CQI C14 may be determined based on the plurality of SINR differences and S13. For example, an average value of or a filtering result for the plurality of SINR differences is used as an SINR difference for compensation, and the CQI C14 is determined based on the SINR difference for compensation and S13.

It should be understood that the foregoing descriptions are provided by using an example in which the first parameter is an SINR and the second parameter is a CQI. The first parameter and the second parameter may alternatively be other parameters.

Alternatively, the first parameter and the second parameter may be a same parameter. The following describes the method 1100 by using an example in which both the first parameter and the second parameter are CQIs. To avoid unnecessary repetition, the following describes only differences from the foregoing descriptions.

In step 1120, a CQI C11 is an example of the parameter value #3 of the first parameter.

In step 1150, the terminal device may determine a CQI C12 (an example of the parameter value #4 of the first parameter) based on a downlink transmission X12. For example, the terminal device may determine S12 based on the downlink transmission X12, and then determine C12 based on S12.

In step 1170, the terminal device may determine a CQI C13 (an example of the parameter value #1 of the first parameter) based on a measurement result of a downlink reference signal #12. For example, the terminal device may determine S13 based on the measurement result of the downlink reference signal #12, and then determine C13 based on S13.

In step 1180, a CQI C14 may be determined based on C11, C12, and C13.

C11 may be understood as a CQI value calculated based on a precoder assumed by the terminal device. C12 may be understood as a CQI value calculated based on a precoder actually used by the network device. A difference between channel quality in a case in which an assumed precoder W11 is used and channel quality in a case in which an actual precoder W12 is used may be calculated based on C11 and C12.

For example, a CQI difference (an example of the first compensation amount) may be determined based on C11 and C12.

The CQI difference may be expressed as a function of C11 and C12. To be specific, the CQI difference is as follows: $\Delta C_1 = f(C_{11}, C_{12})$. For example, $\Delta C_1 = C_{11} - C_{12}$. $C_{11}$ represents the parameter value C11, and $C_{12}$ represents the parameter value C12.

When a precoder assumption manner used during calculation of C13 is the same as a precoder assumption manner used during calculation of C11, it can be considered that the CQI difference may indicate a difference between channel quality in a case in which the network device uses a precoder corresponding to feedback information Z12 for channel information K12 and channel quality in a case in which the network device uses the assumed precoder W13. For example, $\Delta C_1 = C_{11} - C_{12}$. $C_{13} - \Delta C_1$ may indicate the channel quality in the case in which the network device uses the precoder corresponding to the feedback information Z12 for the channel information K12. $C_{13}$ represents the parameter value C13.

The CQI C14 may be determined based on the CQI difference and C13.

For example, $\Delta C_1 = C_{11} - C_{12}$. C14 may be determined based on $C_{13} - \Delta C_1$. For example, $C_{14} = C_{13} - \Delta C_1$. $C_{14}$ represents the parameter value $C14$.

The terminal device may determine the CQI C14 based on the CQI difference. For example, the downlink signal #11 may be a downlink signal #11 closest to a current moment, and the downlink transmission X12 may be a downlink transmission in which the precoder W12 is used and that is closest to the current moment.

Alternatively, the terminal device may determine the CQI C14 based on a plurality of CQI differences obtained through a plurality of times of measurement. For example, the terminal device may perform step 1110 to step 1150 for a plurality of times to obtain C11 and C12, to calculate a plurality of SINR differences. The CQI C14 may be determined based on the plurality of CQI differences and C13. For example, an average value of or a filtering result for the plurality of CQI differences is used as a CQI difference for compensation, and the CQI C14 is determined based on the CQI difference for compensation and C13.

1190: The terminal device reports a CSI report R12 (an example of the indication information #1). The CSI report R12 may indicate the CQI C14 and the feedback information Z12 for the channel information K12.

The feedback information Z12 for the channel information K12 is determined based on the channel information K12. For example, the feedback information Z12 for the channel information K12 may be understood as being obtained by compressing and/or quantizing the channel information K12.

The terminal device may determine Z11 in a plurality of manners.

For example, the terminal device may process the channel information K12 by using a generator, to obtain the feedback information Z12 for the channel information K12.

Alternatively, the terminal device may process the channel information K12 by using a codebook, to obtain the feedback information Z12 for the channel information K12.

The method 1100 may be repeatedly performed (not shown in the figure). Step 1160 to step 1190 may be used to replace step 1110 to step 1130 in a next execution process. The CSI report R12 in step 1190 may be used as a CSI report R11 in the next execution process. S13 in step 1190 may be used as S11 in the next execution process. C14 in step 1190 may be used as C11 in the next execution process.

Alternatively, step 1150 may be periodically performed. Alternatively, step 1150 may be performed as indicated by the network device. Alternatively, step 1150 may be performed as determined by the terminal device.

After performing step 1150, the terminal device performs corresponding compensation.

For example, the terminal device may notify the network device of whether a reported parameter value has been compensated for, and/or a degree of compensation.

Optionally, the method 1100 may further include: The terminal device sends indication information #11 (an example of the indication information #4) to the network device. The indication information #11 indicates at least one of the following: that the CQI C14 is obtained through compensation, or the SINR difference.

If both the first parameter and the second parameter are CQIs, the indication information #11 may indicate at least one of the following: that the CQI C14 is obtained through compensation, or the CQI difference.

Alternatively, the network device may indicate the terminal device whether to perform compensation.

Optionally, the method 1100 may further include: The network device sends indication information #12 (an example of the indication information #5) to the terminal device. The indication information #12 is used to indicate the terminal device to perform compensation. When receiving the indication information #12, the terminal device performs compensation, in other words, performs step 1180.

In the foregoing manner, excessive compensation caused by repeated compensation performed by the terminal device and the network device can be avoided.


Manner 2:

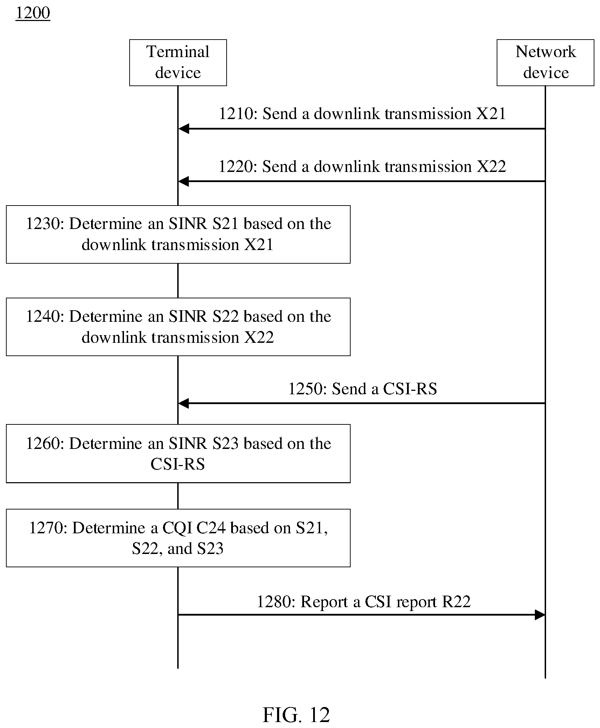

FIG. 12 is a schematic flowchart of a communication method according to an embodiment of this application. As shown in FIG. 12, the method 1200 includes the following steps.

1210: A network device sends a downlink transmission X21 (an example of the downlink transmission #1).

For example, the downlink transmission X21 may be a downlink data transmission, for example, a PDSCH transmission. Alternatively, the downlink transmission X21 may be a downlink reference signal transmission, for example, a DMRS transmission or a CSI-RS transmission.

1220: The network device sends a downlink transmission X22 (an example of the downlink transmission #2).

For example, the downlink transmission X22 may be a downlink data transmission, for example, a PDSCH transmission. Alternatively, the downlink transmission X22 may be a downlink reference signal transmission, for example, a DMRS transmission or a CSI-RS transmission.

A difference between the downlink transmission X21 and the downlink transmission X22 lies in whether a precoder W22 is used. The downlink transmission X21 is a downlink transmission in which the precoder W22 is not used, and the downlink transmission X22 is a downlink transmission in which the precoder W22 is used.

In other words, the precoder W22 is additionally used in the downlink transmission X22 compared with the downlink transmission X21.

The downlink transmission X21 may be a downlink transmission in which a precoder other than the precoder W22 is used, or the downlink transmission X21 may be a downlink transmission in which no precoder is used. For example, the downlink transmission X21 may be a downlink transmission in which no precoder is used, and a precoder used in the downlink transmission X22 may be W22. For another example, a precoder used in the downlink transmission X21 may be W21, and a precoder used in the downlink transmission X22 may be W21*W22.

For example, the precoder W22 may be a precoder corresponding to a CSI report R21 reported by a terminal device.

For example, the precoder W22 may be a precoder corresponding to a CSI report R21 that is last reported by the terminal device before the network device sends the downlink transmission X22.

Further, a downlink reference signal used to generate the CSI report R21 may be sent before the downlink transmission X21.

The downlink transmission X21 and the downlink transmission X22 may be considered as two downlink transmissions having an association relationship. In other words, two downlink transmissions having the association relationship may be used as the downlink transmission X21 and the downlink transmission X22. That the terminal device separately measures the two downlink transmissions having the association relationship may be considered as that the terminal device separately measures the downlink transmission X21 and the downlink transmission X22.

The association relationship may be predefined. Alternatively, the association relationship may be indicated by the network device.

For example, the association relationship may be a channel-associated relationship.

For example, the downlink transmission X21 and the downlink transmission X22 are DMRSs of a same PDSCH.

Alternatively, the association relationship may be an association relationship between two downlink transmission resources.

For example, a downlink reference signal transmission closest to the downlink transmission X22 is used as the downlink transmission X21. It may be predefined in a protocol that a CSI-RS transmission closest to the downlink transmission X22 is the downlink transmission X21. Alternatively, the network device may indicate that a CSI-RS transmission closest to the downlink transmission X22 is the downlink transmission X21.

For another example, the association relationship may be a relative relationship, for example, a time domain offset, between two downlink transmission resources. A resource for the downlink transmission X21 and a resource for the downlink transmission X22 meet the time domain offset. The terminal device may use two downlink transmissions that meet the time domain offset as the downlink transmission X21 and the downlink transmission X22. The time domain offset may be indicated by the network device, or may be predefined in a protocol.

Alternatively, the network device may send indication information to indicate two downlink transmissions having an association relationship. The two downlink transmissions having the association relationship are the downlink transmission X21 and the downlink transmission X22.

It should be understood that the descriptions herein are merely examples. The terminal device may alternatively determine the downlink transmission X21 and the downlink transmission X22 in another manner. This is not limited in this embodiment of this application. For example, the network device may directly indicate the downlink transmission X21 and the downlink transmission X22.

1230: The terminal device determines an SINR S21 (an example of the parameter value #3 of the first parameter) based on the downlink transmission X21.

The terminal device may measure the downlink transmission X21 and calculate the SINR S21 based on a measurement result.

Specifically, the terminal device may determine the SINR S21 based on the downlink transmission X21 and the assumed precoder W21 (an example of the precoder #3).

For example, S21 may meet the following formula:

$$S_{21} = \frac{\left\| g H_{21} W_{21} \right\|^2}{I}.$$

g represents a receiving weight of the terminal device. I represents interference. 1111 represents a norm. $S_{21}$ represents the parameter value S21 of the SINR. $H_{21}$ represents an equivalent channel measurement result obtained by the terminal device by measuring the downlink transmission X21. $H_{21}$ includes a downlink channel response H. It should be understood that this is merely an example, and $H_{21}$ may further include another precoder, to be specific, the precoder used in the downlink channel X21. $W_{21}$ represents the precoder W21.

A precoder assumption manner may be predefined, or may be configured by the network device, or may be determined by the terminal device.

For example, W21 may be a precoder corresponding to channel information K21. The precoder corresponding to the channel information K21 may be understood as a channel eigenvector corresponding to the channel information K21. The channel information K21 may be determined based on a measurement result of the downlink reference signal used to generate the CSI report R21. Alternatively, the channel information K21 may be determined based on a measurement result of another downlink reference signal.

For example, the channel information K21 may be a channel eigenvector. In this case, W21 is the channel information K21, in other words, W21=K21.

For another example, the channel information K21 may be a channel response. In this case, W21 may be obtained by performing eigen decomposition or singular value decomposition on K21.

Alternatively, W21 may be a preset fixed value.

For example, W21 may be 1 or an identity matrix.

It should be understood that the foregoing precoder assumption manners are merely examples and do not constitute a limitation on the solution in this embodiment of this application.

For a manner of determining the SINR S21, refer to the manner of determining the SINR S11 in step 1120 in the manner 1. To avoid repetition, details are not described herein again.

1240: The terminal device determines an SINR S22 (an example of the parameter value #4 of the first parameter) based on the downlink transmission X22.

The terminal device may measure the downlink transmission X22 and calculate the SINR S22 based on a measurement result.

For example, S22 may meet the following formula:

$$S_{22} = \frac{\|gH_{22}\|^2}{I}.$$

g represents a receiving weight of the terminal device. I represents interference. $\|\ \|$ represents a norm. $S_{22}$ represents the parameter value S22 of the SINR. $H_{22}$ represents an equivalent channel measurement result obtained by the terminal device by measuring the downlink transmission X22. $H_{22}$ includes a downlink channel response H and the precoder W22, for example, $H_{22}$=HW22. It should be understood that this is merely an example, and $H_{22}$ may further include another precoder (for example, the precoder used in the downlink channel X21).

For a manner of determining the SINR S22, refer to the manner of determining the SINR S12 in step 1150 in the manner 1. To avoid repetition, details are not described herein again.

1250: The network device sends a downlink reference signal #22 (an example of the downlink reference signal #1), for example, a CSI-RS shown in FIG. 12.

1260: The terminal device determines an SINR S23 (an example of the parameter value #1 of the first parameter) based on the downlink reference signal #22.

The terminal device may perform CSI measurement based on the downlink reference signal #22, and determine the parameter value S23 of the SINR based on a measurement result. Optionally, the terminal device may further determine channel information K22 (an example of the channel information #1) based on the measurement result. In this case, the channel information K22 may also be referred to as CSI-related information K22, and may be used to generate a precoder.

During calculation of the SINR S23, a precoder needs to be assumed. In other words, the SINR S23 is related to an assumed precoder. A precoder assumption manner used during calculation of the SINR S23 is the same as the precoder assumption manner used during calculation of the SINR S21.

For related descriptions, refer to step 1170 in the manner 1. To avoid repetition, details are not described herein again.

1270: The terminal device determines a CQI C24 (an example of the parameter value of the second parameter) based on S21, S22, and S23.

For a specific calculation manner, refer to step 1180 in the manner 1. To avoid repetition, details are not described herein again.

It should be understood that the foregoing descriptions are provided by using an example in which the first parameter is an SINR and the second parameter is a CQI. The first parameter and the second parameter may alternatively be other parameters.

Alternatively, the first parameter and the second parameter may be a same parameter. For example, both the first parameter and the second parameter are CQIs. For related descriptions, refer to the manner 1. Details are not described herein again.

1280: The terminal device reports a CSI report R22. The CSI report R22 may indicate the CQI C24 and feedback information Z22 for the channel information K22.

For related descriptions, refer to step 1190 in the manner 1. To avoid repetition, details are not described herein again.

For example, the method 1200 may be repeatedly performed (not shown in the figure). A precoder corresponding to the CSI report R22 in step 1280 may be used as a precoder for a downlink transmission X22 in a next execution process.

Alternatively, step 1210 and step 1240 may be periodically performed. Alternatively, step 1210 and step 1220 may be performed as determined by the network device.

After the network device performs step 1210 and step 1220, the terminal device performs corresponding compensation.

For example, the terminal device may notify the network device of whether a reported parameter value has been compensated for, and/or a degree of compensation.

For specific descriptions, refer to the manner 1. Details are not described herein again.

It should be noted that the numbers of the steps in this embodiment of this application do not constitute a limitation on an execution sequence. For example, step 1210 may be performed before step 1220, step 1220 may be performed before step 1210, or step 1210 and step 1220 may be simultaneously performed. This is not limited in this embodiment of this application.

Manner 3:

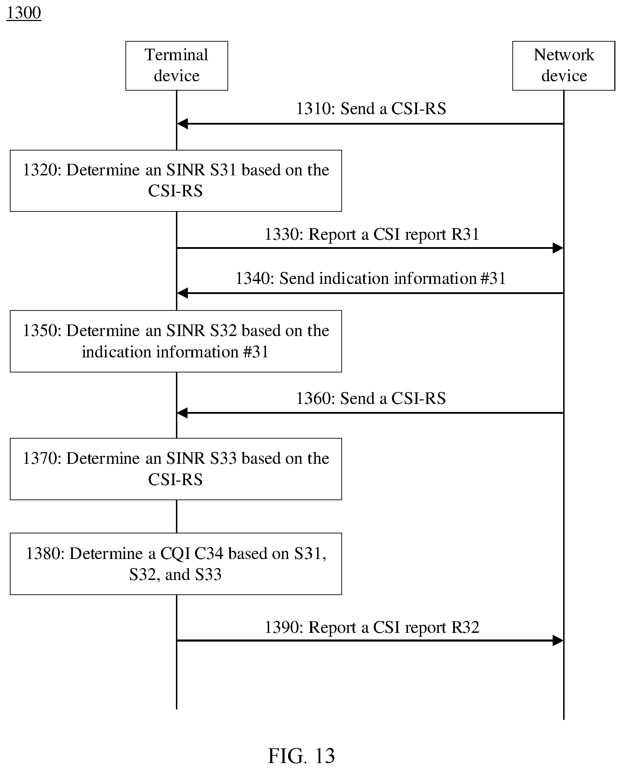

FIG. 13 is a schematic flowchart of a communication method according to an embodiment of this application. As shown in FIG. 13, the method 1300 includes the following steps.

1310: A network device sends a downlink reference signal #31 (an example of the downlink transmission #3), for example, a CSI-RS shown in FIG. 13.

1320: A terminal device determines a parameter value S31 of an SINR (an example of the parameter value #3 of the first parameter) based on the downlink reference signal #31.

Optionally, the terminal device may further determine channel information K31 (an example of the channel information #2) based on the downlink reference signal #31.

For specific descriptions, refer to step 1120 in the manner 1. To avoid repetition, details are not described herein again.

Further, the terminal device may determine a CQI C31 based on S31.

For example, the terminal device may determine, through table lookup, C31 corresponding to S31.

1330: The terminal device reports a CSI report R31. The CSI report R31 indicates feedback information Z31 for the channel information K31.

For specific descriptions, refer to step 1130 in the manner 1. To avoid repetition, details are not described herein again.

Further, the CSI report R31 may further indicate the CQI C31.

1340: The network device sends indication information #31 (an example of the indication information #2) to the terminal device. The indication information #31 indicates a precoder W32 (an example of the precoder #4) used by the network device.

For example, the precoder W32 may be a precoder corresponding to the CSI report R31. For a manner of determining the precoder W32, refer to the manner of determining the precoder W12 in step 1140 in the manner 1. Details are not described herein again.

1350: The terminal device may determine an SINR S32 (an example of the parameter value #4 of the first parameter) based on the indication information #31.

For a manner of calculating the SINR S32, refer to the SINR S31, provided that the assumed precoder W31 used during calculation of the SINR S31 needs to be replaced with the precoder W32.

For example, S32 may meet the following formula:

$$S_{32} = \frac{\left\| gHW_{32} \right\|^2}{I} .$$

$S_{32}$ represents the parameter value S32 of the SINR. $W_{32}$ represents the precoder W32. g represents a receiving weight of the terminal device. I represents interference. $\| \ \|$ represents a norm.

1360: The network device sends a downlink reference signal #32 (an example of the downlink reference signal #1), for example, a CSI-RS shown in FIG. 13.

1370: The terminal device determines an SINR S33 (an example of the parameter value #1 of the first parameter) based on the downlink reference signal #32.

Optionally, the terminal device may further determine channel information K32 (an example of the channel information #1) based on the downlink reference signal #32.

For specific descriptions, refer to step 1170 in the manner 1. To avoid repetition, details are not described herein again.

1380: The terminal device determines a CQI C34 (an example of the parameter value of the second parameter) based on S31, S32, and S33.

For specific descriptions, refer to step 1180 in the manner 1. To avoid repetition, details are not described herein again.

It should be understood that the foregoing descriptions are provided by using an example in which the first parameter is an SINR and the second parameter is a CQI. The first parameter and the second parameter may alternatively be other parameters.

Alternatively, the first parameter and the second parameter may be a same parameter. For example, both the first parameter and the second parameter are CQIs. For specific descriptions, refer to the manner 1. To avoid repetition, details are not described herein again.

1390: The terminal device reports a CSI report R32 (an example of the indication information #1). The CSI report R32 may indicate the CQI C34 and feedback information Z32 for the channel information K32.

For specific descriptions, refer to step 1190 in the manner 1. To avoid repetition, details are not described herein again.

For example, the method 1300 may be repeatedly performed (not shown in the figure). Step 1360 to step 1390 may be used to replace step 1310 to step 1330 in a next execution process. The CSI report R32 in step 1390 may be used as a CSI report R31 in the next execution process. S33 in step 1390 may be used as S31 in the next execution process. C34 in step 1390 may be used as C31 in the next execution process.

Alternatively, step 1340 and step 1350 may be periodically performed. Alternatively, step 1340 may be performed as determined by the network device.

After the network device performs step 1340, the terminal device performs corresponding compensation.

For example, the terminal device may notify the network device of whether a reported parameter value has been compensated for, and/or a degree of compensation.

Optionally, the method 1300 may further include: The terminal device sends indication information #32 (an example of the indication information #4) to the network device. The indication information #32 indicates at least one of the following: that the CQI C34 is obtained through compensation, or an SINR difference.

If both the first parameter and the second parameter are CQIs, the indication information #32 may indicate at least one of the following: that the CQI C34 is obtained through compensation, or a CQI difference.

Alternatively, the network device may indicate the terminal device whether to perform compensation.

Optionally, the method 1300 may further include: The network device sends indication information #33 (an example of the indication information #5) to the terminal device. The indication information #33 is used to indicate the terminal device to perform compensation. When receiving the indication information #33, the terminal device performs compensation, in other words, performs step 1380. The indication information #33 and the indication information #31 may be same information or different information. This is not limited in this embodiment of this application.

In the foregoing manner, excessive compensation caused by repeated compensation performed by the terminal device and the network device can be avoided.

Manner 4:

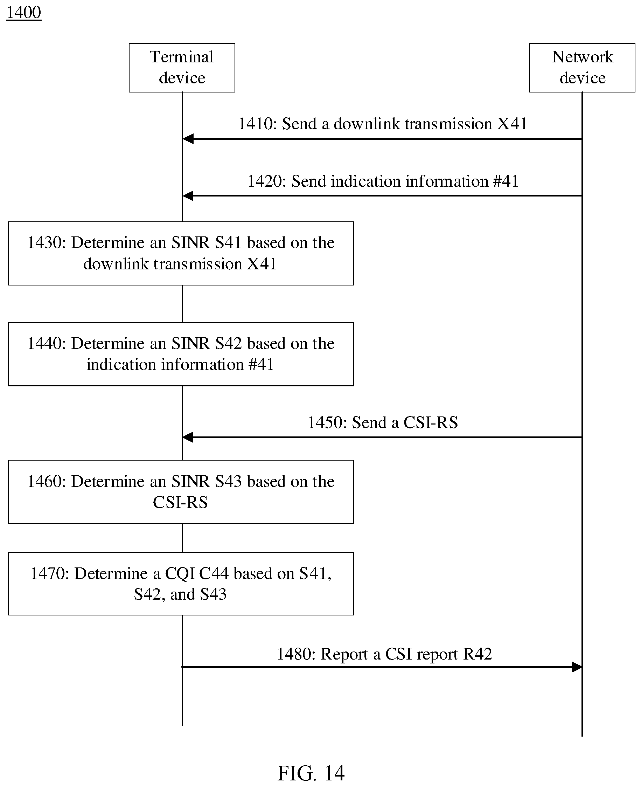

FIG. 14 is a schematic flowchart of a communication method according to an embodiment of this application. As shown in FIG. 14, the method 1400 includes the following steps.

1410: A network device sends a downlink transmission X41 (an example of the downlink transmission #3).

1420: The network device sends indication information #41 (an example of the indication information #2). The indication information #41 indicates a precoder W42 (an example of the precoder #4) used by the network device.

For example, the downlink transmission X41 may be a downlink data transmission, for example, a PDSCH transmission. Alternatively, the downlink transmission X41 may be a downlink reference signal transmission, for example, a DMRS transmission or a CSI-RS transmission.

The downlink transmission X41 is a downlink transmission that is not processed by using the precoder W42.

For related descriptions of the downlink transmission X41, refer to the downlink transmission X21 in the manner 2. Details are not described herein again.

For example, the precoder W42 may be a precoder corresponding to a CSI report R41 reported by a terminal device.

For example, the precoder W42 may be a precoder corresponding to a CSI report R41 that is last reported by the terminal device before the network device sends the indication information #41.

The terminal device may determine the downlink transmission X41 in a plurality of manners.

For example, the terminal device may measure a downlink transmission in a second time period, and calculate an SINR S41 based on a measurement result. The downlink transmission in the second time period is a downlink transmission in which the precoder W42 is not used. The downlink transmission measured in the second time period may be considered as a downlink transmission X42. For example, the second time period may be a time period in which the CSI report R41 used to generate the precoder W42 has not taken effect.

For example, the second time period may be a time period before a first moment. The first moment may be $t + \Delta t1$. The terminal device may measure a downlink transmission in the time period, to determine the SINR S41. t represents a start moment or an end moment at which the CSI report R41 is sent. $\Delta t1$ represents a first time offset. $\Delta t1$ may be predefined, or may be indicated by the network device.

It should be understood that the terminal device may alternatively determine the downlink transmission X41 in another manner. For example, the network device may directly indicate the downlink transmission X41. This is not limited in this embodiment of this application.

1430: The terminal device determines the parameter value S41 of the SINR (an example of the parameter value #3 of the first parameter) based on the downlink transmission X41.

For specific descriptions, refer to step 1230 in the manner 2. To avoid repetition, details are not described herein again.

1440: The terminal device determines a parameter value S42 of the SINR (an example of the parameter value #4 of the first parameter) based on the indication information #41.

For specific descriptions, refer to step 1360 in the manner 3. To avoid repetition, details are not described herein again.

1450: The network device sends a downlink reference signal #42 (an example of the downlink reference signal #1), for example, a CSI-RS shown in FIG. 14.

1460: The terminal device determines an SINR S43 (an example of the parameter value #1 of the first parameter) based on the downlink reference signal #42.

Optionally, the terminal device may further determine channel information K42 (an example of the channel information #1) based on the downlink reference signal #42.

For specific descriptions, refer to step 1170 in the manner 1. To avoid repetition, details are not described herein again.

1470: The terminal device determines a CQI C44 (an example of the parameter value of the second parameter) based on S41, S42, and S43.

For specific descriptions, refer to step 1180 in the manner 1. To avoid repetition, details are not described herein again.

It should be understood that the foregoing descriptions are provided by using an example in which the first parameter is an SINR and the second parameter is a CQI. The first parameter and the second parameter may alternatively be other parameters.

Alternatively, the first parameter and the second parameter may be a same parameter. For example, both the first parameter and the second parameter are CQIs. For specific descriptions, refer to the manner 1. To avoid repetition, details are not described herein again.

1480: The terminal device reports a CSI report R42 (an example of the indication information #1). The CSI report R42 may indicate the CQI C44 and feedback information Z42 for the channel information K42.

For specific descriptions, refer to step 1190 in the manner 1. To avoid repetition, details are not described herein again.

For example, the method 1400 may be repeatedly performed (not shown in the figure). A precoder corresponding to the CSI report R42 in step 1480 is used as a precoder W42 in a next execution process.

Alternatively, step 1410 to step 1440 may be periodically performed. Alternatively, step 1410 and step 1420 may be performed as determined by the network device.

After the network device performs step 1410 and step 1420, the terminal device performs corresponding compensation.

For example, the terminal device may notify the network device of whether a reported parameter value has been compensated for, and/or a degree of compensation.

For specific descriptions, refer to the manner 3. Details are not described herein again.

Manner 5:

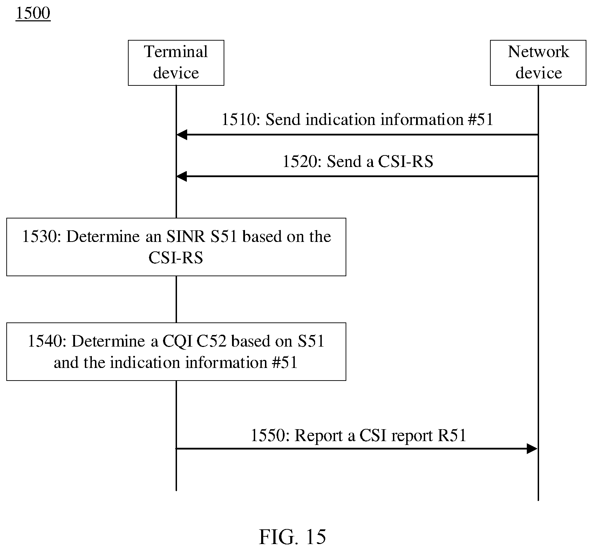

FIG. 15 is a schematic flowchart of a communication method according to an embodiment of this application. As shown in FIG. 15, the method 1500 includes the following steps.

1510: A network device sends indication information #51 (an example of the indication information #3). The indication information #51 indicates an SINR difference (an example of the first compensation amount).

1520: The network device sends a downlink reference signal #51 (an example of the downlink reference signal #1), for example, a CSI-RS shown in FIG. 15.

1530: A terminal device determines a parameter value S51 of an SINR (an example of the parameter value #1 of the first parameter) based on the downlink reference signal #51.

Optionally, the terminal device further determines channel information K51 (an example of the channel information #1) based on the downlink reference signal #51.

For specific descriptions, refer to step 1120 in the manner 1. To avoid repetition, details are not described herein again.

Further, the terminal device may determine a CQI C51 based on S51.

For example, the terminal device may determine, through table lookup, C51 corresponding to S51.

1540: The terminal device determines a CQI C52 (an example of the parameter value of the second parameter) based on S51 and the indication information #51.

For example, the indication information #51 indicates the SINR difference $\Delta S_5$, and the terminal device may determine C52 based on $S_{51} - \Delta S_5$. $S_{51}$ represents the parameter value S51. For example, the CQI C52 corresponding to $S_{51} - \Delta S_5$ may be determined through table lookup.

It should be understood that the foregoing descriptions are provided by using an example in which the first parameter is an SINR and the second parameter is a CQI. The first parameter and the second parameter may alternatively be other parameters.

Alternatively, the first parameter and the second parameter may be a same parameter. The following provides descriptions by using an example in which both the first parameter and the second parameter are CQIs.

For example, the indication information #51 indicates a CQI difference $\Delta C_5$, and the terminal device may determine C52 based on $C_{51} - \Delta C_5$. $C_{51}$ represents the parameter value C51.

1550: The terminal device reports a CSI report R51 (an example of the indication information #1). The CSI report R51 may indicate the CQI 52 and feedback information Z51 for the channel information K51.

For specific descriptions, refer to step 1190 in the manner 1. To avoid repetition, details are not described herein again.

For example, step 1510 may be periodically performed. Alternatively, step 1510 may be performed as determined by the network device.

After the network device performs step 1510, the terminal device performs corresponding compensation.

For example, the terminal device may notify the network device of whether a reported parameter value has been compensated for, and/or a degree of compensation.

Optionally, the method 1500 may further include: The terminal device sends indication information #52 (an example of the fourth indication information) to the network device. The indication information #52 indicates at least one of the following: that the CQI C52 is obtained through compensation, or the SINR difference.

If both the first parameter and the second parameter are CQIs, the indication information #52 may indicate at least one of the following: that the CQI C52 is obtained through compensation, or the CQI difference.

Alternatively, the network device may indicate the terminal device whether to perform compensation.

Optionally, the method 1500 may further include: The network device sends indication information #53 (an example of the fifth indication information) to the terminal device. The indication information #53 is used to indicate the terminal device to perform compensation. When receiving the indication information #53, the terminal device performs compensation, in other words, performs step 1540. The indication information #53 and the indication information #51 may be same information or different information. This is not limited in this embodiment of this application.

In the foregoing manner, excessive compensation caused by repeated compensation performed by the terminal device and the network device can be avoided.

It can be understood that the examples in the manner 1 to the manner 5 in embodiments of this application are merely intended to help a person skilled in the art understand embodiments of this application, but not to limit embodiments of this application to specific scenarios in the examples. Clearly, a person skilled in the art may make various equivalent modifications or changes based on the foregoing examples, and the modifications or changes also fall within the scope of embodiments of this application.

In an AI model-based CSI feedback mode, performance of the AI model affects accuracy of content received by a network device. For example, a terminal device may generate CSI feedback information based on original CSI by using a CSI generator, and report the CSI feedback information to the network device. The network device processes the CSI feedback information by using a CSI reconfigurator to generate recovery CSI. In an ideal state, recovery information for channel information is the same as the channel information. In other words, the CSI reconfigurator can reconstruct the channel information. However, during actual application, there is usually an error between recovery information for channel information and the channel information. In some scenarios, an error between recovered information for channel information and channel information is large. For example, when the AI model malfunctions or the AI model does not match a current scenario, it is difficult to ensure operation performance of the AI model, and a large error may occur between recovered information for channel information and channel information, affecting a related configuration of the network device.

In view of this, an embodiment of this application further provides a communication method, to enable a network device to obtain a performance status of an AI model for subsequent decision-making. It should be understood that the method may be implemented in combination with any one of the foregoing solutions in FIG. 4 to FIG. 15, or may be independently implemented.

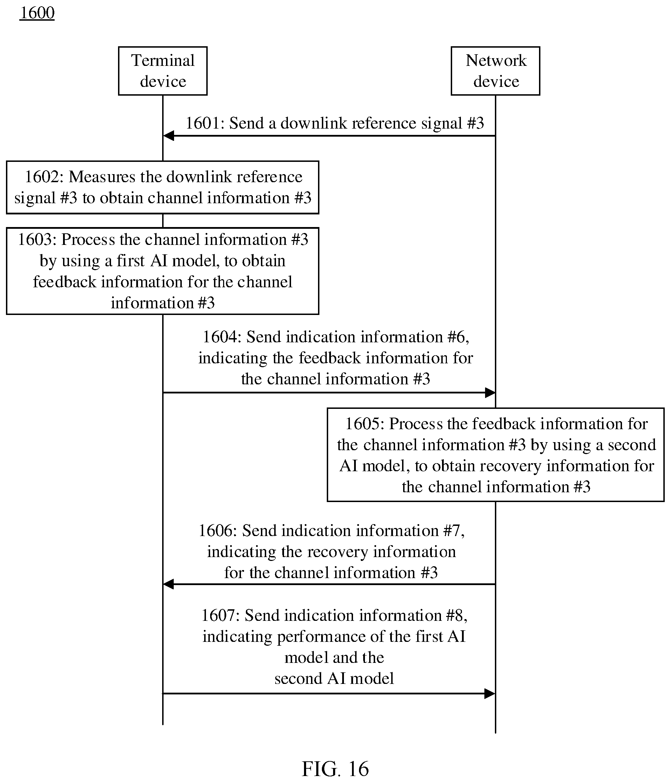

FIG. 16 shows a communication method 1600 according to an embodiment of this application. As shown in FIG. 16, the method 1600 may include the following steps.

1601: A network device sends a downlink reference signal #3 (namely, a third downlink reference signal) to a terminal device.

1602: The terminal device measures the downlink reference signal #3 to obtain channel information #3 (namely, third channel information).

1603: The terminal device processes the channel information #3 by using a first AI model, to obtain feedback information for the channel information #3.

1604: The terminal device sends indication information #6 (namely, seventh indication information) to the network device, where the indication information #6 indicates the feedback information for the channel information #3.

1605: The network device processes the feedback information for the channel information #3 by using a second AI model, to obtain recovery information for the channel information #3.

1606: The network device sends indication information #7 (namely, eighth indication information) to the terminal device, where the indication information #7 indicates the recovery information for the channel information #3.

1607: The terminal device sends indication information #8 (namely, ninth indication information) to the network device, where the indication information #8 indicates performance of the first AI model and the second AI model, and the performance is based on a difference between the channel information #3 and the recovery information for the channel information #3.

For example, the downlink reference signal #3 may include one or more of a CSI-RS, a DMRS, or the like.

In step 1602, the terminal device receives the downlink reference signal #3, and performs measurement, to be specific, performs channel estimation, based on the downlink reference signal #3, to obtain a measurement result of the downlink reference signal #3. The channel information #3 is based on the measurement result of the downlink reference signal #3.

For example, the channel information #3 may be a channel eigenvector.

Alternatively, the channel information #3 may be a channel response.

It should be understood that the foregoing descriptions are merely examples, and the channel information #3 may alternatively be other information related to a channel status. This is not limited in this embodiment of this application.

The first AI model may be an encoder, for example, the CSI generator shown in FIG. 6. The second AI model may be a decoder, for example, the CSI reconfigurator shown in FIG. 6. The first AI model and the second AI model are used in cooperation. The first AI model is configured to process channel information to obtain feedback information for the channel information. The second AI model is configured to process the feedback information for the channel information, to be specific, generate recovery information for the channel information. For specific descriptions of the AI model, refer to the foregoing descriptions. Details are not described herein again.

For example, the downlink reference signal #3 may be a CSI-RS. After performing CSI measurement, the terminal device may generate a CSI report. The CSI report may indicate the feedback information for the channel information #3. The CSI report may be used as the indication information #6.

Alternatively, the indication information #6 may be information in another form. This is not limited in this embodiment of this application.

Channel information is in a one-to-one correspondence with recovery information for the channel information. The terminal device may monitor performance of the AI model based on a difference between channel information and corresponding recovery information for the channel information. The foregoing correspondence exists between the channel information #3 and the recovery information for the channel information #3. The terminal device may determine a difference between the recovery information for the channel information #3 and the channel information #3, to monitor performance of the CSI generator and the CSI reconfigurator.

The indication information #7 may indicate recovery information for one or more pieces of channel information. The recovery information for the one or more pieces of channel information includes the recovery information for the channel information #3.

If the terminal device performs a plurality of times of measurement to obtain a plurality of pieces of channel information, when monitoring performance of the AI model, the terminal device determines channel information corresponding to recovery information for the channel information that is indicated by the network device. If the indication information #7 indicates recovery information for one piece of channel information (namely, the recovery information for the channel information #3), the terminal device determines specific channel information corresponding to the recovery information for the channel information, in other words, the terminal device determines specific channel information that is the channel information #3. If the indication information #7 indicates recovery information for a plurality of pieces of channel information (namely, the recovery information for the channel information #3), the terminal device determines specific channel information respectively corresponding to the recovery information for the plurality of pieces of channel information.

The terminal device may determine, in a plurality of manners, the channel information corresponding to the recovery information for the channel information that is indicated by the network device.

Optionally, the terminal device determines the channel information #3 based on a correspondence between channel information and recovery information for the channel information.

The terminal device may determine the channel information #3 from the plurality of pieces of channel information based on the correspondence.

The correspondence may be predefined, or may be configured by the network device.

For example, the correspondence may be as follows: The recovery information for the channel information that is indicated by the indication information #7 corresponds to channel information corresponding to feedback information for channel information that is reported by the terminal device in the last P times before the terminal device receives the indication information #7. P is an integer greater than or equal to 1.

In this case, the indication information #7 may indicate recovery information for P pieces of channel information.

For example, the correspondence may be as follows: The recovery information for the channel information that is indicated by the indication information #7 corresponds to channel information corresponding to feedback information for channel information that is reported by the terminal device and that is uploaded in the last P1 times to the last P2 times before the terminal device receives the indication information #2. P2 is an integer greater than or equal to 1, and P1 is an integer greater than or equal to P2.

When sending the indication information #7, the network device may have not completed processing of feedback information for one or more pieces of channel information that are last uploaded by the terminal device. For example, when delivering the indication information #7, the network device has not processed feedback information for two pieces of channel information that are last uploaded by the terminal device. In this case, there is no correspondence between recovery information for channel information that is indicated by the network device and the feedback information for the two pieces of channel information that are last uploaded by the terminal device, and P2 may be set to 3. A value of P2 is adjusted, so that the terminal device can obtain a more accurate correspondence.

For example, the correspondence may be as follows: The recovery information for the channel information that is indicated by the indication information #7 corresponds to channel information corresponding to feedback information for channel information that is uploaded after a moment t1-t4. t1 represents a moment at which the indication information #7 is sent, and t4>0.

For example, the correspondence may be as follows: The recovery information for the channel information that is indicated by the indication information #7 corresponds to channel information corresponding to feedback information for channel information that is uploaded within a period from a moment t1-t2 to a moment t1-t3. t1 represents a moment at which the indication information #7 is sent, and $0 \leq t3 \leq t2$.

When sending the indication information #7, the network device may have not completed processing of feedback information for one or more pieces of channel information that are last uploaded by the terminal device. For example, when delivering the indication information #7, the network device has not processed feedback information for channel information that is uploaded by the terminal device after the moment t1-t3. In this case, there is no correspondence between recovery information for channel information that is indicated by the network device and the feedback information for the channel information that is uploaded by the terminal device after the moment t1-t3. A value of t3 is adjusted, so that the terminal device can obtain a more accurate correspondence.

It should be understood that the foregoing descriptions are merely examples, and the correspondence may alternatively be expressed in another form. This is not limited in this embodiment of this application.

Optionally, the network device sends indication information #9 to the terminal device, where the indication information #9 indicates the channel information #3.

The network device may indicate, to the terminal device by using the indication information #9, channel information corresponding to the recovery information for the channel information that is indicated by the indication information #7. For example, the indication information #7 indicates the recovery information for the channel information #3. The channel information #9 may indicate channel information corresponding to the recovery information for the channel information #3.

In other words, the network device may directly notify the terminal device of specific channel information corresponding to the recovery information for the channel information that is indicated by the indication information #7.

For example, the indication information #9 indicates an identifier of the feedback information for the channel information #3. The terminal device may determine the channel information #3 from the plurality of pieces of channel information based on the identifier.

For example, the indication information #9 indicates a sending moment for the feedback information for the channel information #3. The terminal device may determine the channel information #3 from the plurality of pieces of channel information based on the moment.

As described above, the indication information #7 may indicate feedback information for a plurality of pieces of channel information.

For example, the recovery information for the plurality of pieces of channel information may be sorted in order.

The terminal device may determine, based on the order, channel information respectively corresponding to the recovery information for the plurality of pieces of channel information.

For example, the recovery information for the plurality of pieces of channel information may be sorted in front-to-back or back-to-front order based on feedback time.

For another example, the recovery information for the plurality of pieces of channel information may be sorted in descending or ascending order of identifiers of feedback information.

Alternatively, the network device may separately indicate channel information corresponding to the recovery information for the plurality of pieces of channel information.

It should be understood that the foregoing descriptions are merely examples, and the terminal device may alternatively determine, in another manner, the channel information corresponding to the recovery information for the channel information that is indicated by the network device.

The terminal device may calculate the difference between the channel information #3 and the recovery information for the channel information #3.

A difference between channel information and recovery information for the channel information may be used to determine performance of the AI model.

When the indication information #7 indicates recovery information for a plurality of pieces of channel information, the terminal device may separately determine differences between the recovery information for the plurality of pieces of channel information and channel information corresponding to the recovery information. For ease of description, a difference between recovery information for one piece of channel information (for example, the recovery information for the channel information #3) and corresponding channel information (for example, the channel information #3) is mainly used below as an example for description.

For example, the difference between the recovery information for the channel information #3 and the channel information #3 may be represented as a similarity between the recovery information for the channel information #3 and the channel information #3.

For example, the similarity between the recovery information for the channel information #3 and the channel information #3 may be determined based on a cosine similarity, for example, a generalized cosine similarity (generalized cosine similarity, GCS) or a squared generalized cosine similarity (squared generalized cosine similarity, SGCS), between the recovery information for the channel information #3 and the channel information #3.

For example, the difference between the recovery information for the channel information #3 and the channel information #3 may be represented as a degree of difference between the recovery information for the channel information #3 and the channel information #3.

For another example, the degree of difference between the recovery information for the channel information #3 and the channel information #3 may be determined based on a mean square error (mean square error, MSE) or a normalized mean square error (normalized mean square error, NMSE) between the recovery information for the channel information #3 and the channel information #3.

One resource unit is used below as an example for description.

For example, the similarity between the recovery information for the channel information #3 and the channel information #3 may meet the following formula:

$$S_{GCS} = \frac{\left\| V_3'^H V_3 \right\|}{\left\| V_3' \right\| \left\| V_3 \right\|}.$$

$V_3'$ represents the recovery information for the channel information #3. $V_3$ represents the channel information #3. $S_{GCS}$ represents a value of the GCS between the recovery information for the channel information #3 and the channel information #3. $\| \|$ represents a norm, for example, a Frobenius (Frobenius) norm or a 2-norm.

For another example, the similarity between the recovery information for the channel information #3 and the channel information #3 may meet the following formula:

$$S_{SGCS} = \left( \frac{\left\| V_3'^H V_3 \right\|}{\left\| V_3' \right\| \left\| V_3 \right\|} \right)^2.$$

$S_{SGCS}$ represents a value of the SGCS between the recovery information for the channel information #3 and the channel information #3.

For another example, the degree of difference between the recovery information for the channel information #3 and the channel information #3 may meet the following formula:

$$E_{MSE} = \left\| V_3{}' - V_3 \right\|^2.$$

$E_{MSE}$ represents a value of the MSE between the recovery information for the channel information #3 and the channel information #3.

For another example, the degree of difference between the recovery information for the channel information #3 and the channel information #3 may meet the following formula:

$$E_{NMSE} = \frac{\left\| V_3{}' - V_3 \right\|^2}{\left\| V_3 \right\|^2}.$$

$E_{NMSE}$ represents a value of the NMSE between the recovery information for the channel information #3 and the channel information #3.

For a plurality of resource units, calculation may be performed for the plurality of resource units in the foregoing manner, and then calculation results are averaged to determine the difference between the recovery information for the channel information #3 and the channel information #3.

It should be understood that the foregoing descriptions are merely examples, and the difference between the recovery information for the channel information #3 and the channel information #3 may alternatively be represented in another manner, in other words, may be measured in another manner.

Further, a manner of representing the difference between the recovery information for the channel information #3 and the channel information #3 may be predefined, or may be configured by the network device.

For example, the network device may indicate the terminal device to represent the difference between the recovery information for the channel information #3 and the channel information #3 as the similarity between the recovery information for the channel information #3 and the channel information #3.

The indication information #8 indicates the performance of the first AI model and the performance of the second AI model. The terminal device reports the indication information #8 to the network device, to notify the network device of the performance of the first AI model and the performance of the second AI model. This facilitates subsequent decision-making by the network device.

For example, the network device may determine whether to change the first AI model and the second AI model. For another example, the network device may determine whether to update a parameter of the first AI model and a parameter of the second AI model. For another example, the network device may determine whether to change a CSI feedback mode.

The performance is based on the difference between the channel information #3 and the recovery information for the channel information #3.

Optionally, the indication information #8 may indicate at least one of the following:

the similarity between the recovery information for the channel information #3 and the channel information #3;

the degree of difference between the recovery information for the channel information #3 and the channel information #3;

whether the similarity between the recovery information for the channel information #3 and the channel information #3 is greater than a first threshold; or

whether the degree of difference between the recovery information for the channel information #3 and the channel information #3 is greater than a second threshold.

It should be understood that the foregoing descriptions are merely examples, and the indication information #8 may alternatively indicate the difference between the recovery information for the channel information #3 and the channel information #3 by using other information. For example, the indication information #8 may alternatively indicate whether the similarity between the recovery information for the channel information #3 and the channel information #3 is greater than or equal to the first threshold. For another example, the indication information #8 may alternatively indicate whether the degree of difference between the recovery information for the channel information #3 and the channel information #3 is greater than or equal to the second threshold. Alternatively, the "greater than" in the foregoing descriptions may be replaced with "less than".

The first threshold may be predefined, or may be configured by the network device.

The second threshold may be predefined, or may be configured by the network device.

For example, the terminal device may report the indication information #8 to the network device each time the terminal device receives the indication information #7.

Alternatively, the terminal device may report the indication information #8 to the network device after receiving the indication information #7 for a plurality of times. For example, the indication information #8 may indicate differences between recovery information for a plurality of pieces of channel information that is indicated by the indication information #7 received in the plurality of times and corresponding channel information. For another example, the indication information #8 may alternatively indicate an average value of differences between recovery information for a plurality of pieces of channel information that is indicated by the indication information #7 received in the plurality of times and corresponding channel information. Content specifically indicated by the indication information #8 is not limited in this embodiment of this application. The quantity of times may be predefined, or may be configured by the network device, or may be determined by the terminal device.

Alternatively, the terminal device may report the indication information #8 to the network device when the similarity between the recovery information for the channel information #3 and the channel information #3 is greater than the first threshold.

Alternatively, the terminal device may report the indication information #8 to the network device when the degree of difference between the recovery information for the channel information #3 and the channel information #3 is greater than the second threshold.

It should be understood that the foregoing descriptions are merely examples, and an occasion at which the terminal device reports the indication information #8 may alternatively be determined in another manner. This is not limited in this embodiment of this application.

Further, a resource on which the terminal device reports the indication information #8 may be preconfigured, or may be scheduled by the network device. For example, the network device may perform scheduling by using the indication information #7, or may perform scheduling by using control signaling for scheduling the indication information #7, or may perform scheduling by using other signaling. This is not limited in this embodiment of this application.

In addition, the method 1600 may alternatively be used in combination with the method shown in FIG. 9. Specifically, the downlink reference signal #3 may be the downlink reference signal #2, the channel information #3 may be the channel information #2, and the indication information #7 may be the indication information #2.

In another possible implementation, the terminal device may send feedback information for channel information #4 and the channel information #4 to the network device, and the network device may determine performance of the AI model based on the channel information #4 and the feedback information for the channel information #4. For descriptions of the channel information #4 and the feedback information for the channel information #4, refer to the channel information and the feedback information for the channel information in the foregoing descriptions. Details are not described herein again.

An occasion at which the terminal device sends the channel information #4 may be predefined, or may be configured by the network device.

For example, the terminal device may periodically send the channel information #4.

For another example, the network device may indicate the terminal device to send the channel information #4.

It can be further understood that the information names used in some of the foregoing embodiments are merely examples and do not constitute a limitation on the protection scope of embodiments of this application.

It can be further understood that the formulas used in embodiments of this application are merely examples for description and do not constitute a limitation on the protection scope of embodiments of this application. During calculation of the foregoing parameters, calculation may be performed based on the foregoing formulas, or calculation may be performed based on variations of the foregoing formulas, or calculation may be performed in another manner, to meet calculation results of the formulas.

It can be further understood that some optional features in embodiments of this application may be independent of other features in some scenarios, or may be combined with other features in some scenarios. This is not limited.

It can be further understood that the solutions in embodiments of this application may be appropriately combined for use, and explanations or descriptions of terms in the embodiments may be mutually referenced or explained in the embodiments. This is not limited.

It can be further understood that various numeric sequence numbers in embodiments of this application do not mean an execution sequence, but are merely intended for differentiation for ease of description, and therefore should not constitute any limitation on implementation processes of embodiments of this application.

It can be further understood that, in the foregoing method embodiments, methods and operations implemented by a device may alternatively be implemented by a component (for example, a chip or a circuit) of the device.

Corresponding to the methods provided in the foregoing method embodiments, embodiments of this application further provide a corresponding apparatus. The apparatus includes corresponding modules for performing the foregoing method embodiments. The modules may be software, hardware, or a combination of software and hardware. It can be understood that the technical features described in the method embodiments are also applicable to the following apparatus embodiments.

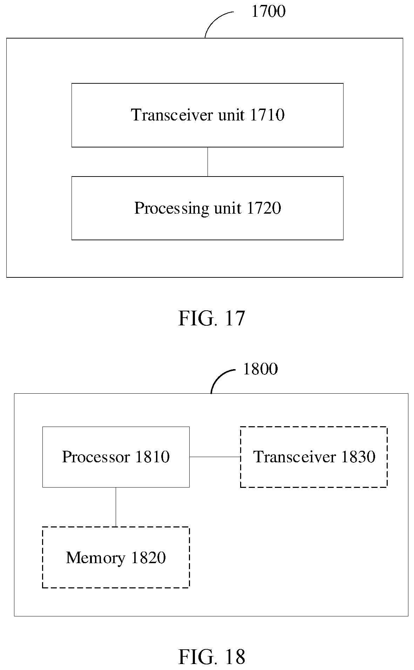

FIG. 17 is a diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface or a communication unit. The processing unit 1720 may be configured to implement a corresponding processing function, for example, configure a resource. The processing unit 1720 may also be referred to as a processor or the like.

Optionally, the apparatus 1700 further includes a storage unit. The storage unit may be configured to store instructions and/or data. The processing unit 1720 may read the instructions and/or the data in the storage unit, so that the apparatus implements actions of a device or a network element in the foregoing method embodiments.

The communication apparatus 1700 may be a terminal device, or may be a communication apparatus that is used in a terminal device or used in cooperation with a terminal device and that can implement a communication method performed on the terminal device side. Alternatively, the communication apparatus 1700 may be an access network device, or may be a communication apparatus that is used in a network device or used in cooperation with a network device and that can implement a communication method performed on the network device side.

When the communication apparatus 1700 is used in a terminal device, the apparatus 1700 may implement the steps or the processes performed by the terminal device in the foregoing method embodiments. The transceiver unit 1710 may be configured to perform sending/receiving-related operations of the terminal device in the foregoing method embodiments. The processing unit 1720 may be configured to perform processing-related operations of the terminal device in the foregoing method embodiments.

When the communication apparatus 1700 is used in a network device, the apparatus 1700 may implement the steps or the processes performed by the network device in the foregoing method embodiments. The transceiver unit 1710 may be configured to perform sending/receiving-related operations of the network device in the foregoing method embodiments. The processing unit 1720 may be configured to perform processing-related operations of the network device in the foregoing method embodiments.

It should be understood that specific processes of performing the foregoing corresponding steps by the units are described in detail in the foregoing method embodiments. For brevity, details are not described herein again.

It should be further understood that the apparatus 1700 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. **In** an optional example, a person skilled in the art can understand that the apparatus 1700 may be specifically the terminal device in the foregoing embodiments, and may be configured to perform the processes and/or the steps corresponding to the terminal device in the foregoing method embodiments; or the apparatus 1700 may be specifically the network device in the foregoing embodiments, and may be configured to perform the processes and/or the steps corresponding to the network device in the foregoing method embodiments. To avoid repetition, details are not described herein again.

The apparatus 1700 in the foregoing solutions has functions of implementing corresponding steps performed by a device (for example, the terminal device, or for another example, the network device) in the foregoing methods. The functions may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit 1710 may alternatively be a transceiver circuit (for example, may include a receiver circuit and a transmitter circuit), and the processing unit may be a processing circuit.

It should be noted that the apparatus in FIG. 17 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

FIG. 18 is a diagram of another communication apparatus 1800 according to an embodiment of this application. The apparatus 1800 includes a processor 1810. The processor 1810 is configured to execute a computer program or instructions stored in a memory 1820, or read data or signaling stored in the memory 1820, to perform the methods in the foregoing method embodiments. Optionally, there is one or more processors 1810.

Optionally, as shown in FIG. 18, the apparatus 1800 further includes the memory 1820, and the memory 1820 is configured to store a computer program or instructions and/or data. The memory 1820 may be integrated with the processor 1810, or may be disposed separately. Optionally, there is one or more memories 1820.

Optionally, as shown in FIG. 18, the apparatus 1800 further includes a transceiver 1830, and the transceiver 1830 is configured to send and/or receive a signal. For example, the processor 1810 is configured to control the transceiver 1830 to send and/or receive a signal.

In a solution, the communication apparatus 1800 may be used in a terminal device. Specifically, the communication apparatus 1800 may be a terminal device, or may be an apparatus that can support the terminal device in implementing the functions of the terminal device in any one of the foregoing examples. The apparatus 1800 is configured to implement the operations performed by the terminal device in the foregoing method embodiments.

For example, the processor 1810 is configured to execute the computer program or instructions stored in the memory 1820, to implement related operations of the terminal device in the foregoing method embodiments.

In another solution, the communication apparatus 1800 may be used in a network device. Specifically, the communication apparatus 1800 may be a network device, or may be an apparatus that can support the network device in implementing the functions of the network device in any one of the foregoing examples. The apparatus 1800 is configured to implement the operations performed by the network device in the foregoing method embodiments.

For example, the processor 1810 is configured to execute the computer program or instructions stored in the memory 1820, to implement related operations of the network device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or transistor logic device, or a discrete hardware component, a memory (a storage module) may be integrated into the processor.

It should be further noted that the memory described in this specification is intended to include but is not limited to these memories and any other appropriate type of memory.

An embodiment of this application further provides a computer-readable storage medium. The computer-readable storage medium stores computer instructions for implementing a method performed by a communication device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, a method performed by a device (for example, the terminal device, or for another example, the network device) in the foregoing method embodiments is implemented.

An embodiment of this application further provides a communication system, including the foregoing terminal device and network device. The terminal device and the network device may implement the communication method shown in any one of the foregoing examples in FIG. 7 to FIG. 15.

Optionally, the system further includes a device that communicates with the foregoing terminal device and/or network device.

For descriptions and benefits of related content of any one of the apparatuses provided above, refer to a corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving a first downlink reference signal from a network device;
   determining a first parameter value of a first parameter based on a measurement result of the first downlink reference signal and a first precoder, wherein the first parameter reflects downlink channel quality;
   compensating for the first parameter value of the first parameter based on a first compensation amount to obtain a parameter value of a second parameter, wherein the first compensation amount indicates a difference between downlink channel quality in a case in which the network device uses the first precoder and downlink channel quality in a case in which the network device uses a second precoder, and the second parameter and the first parameter are a same parameter, or the second parameter is another parameter that is different from the first parameter and that reflects the downlink channel quality; and
   sending first indication information to the network device, wherein the first indication information indicates the parameter value of the second parameter and feedback information for first channel information, the feedback information for the first channel information is based on the measurement result of the first downlink reference signal, and the feedback information for the first channel information corresponds to the second precoder.

2. The method according to claim 1, wherein the first compensation amount is determined based on a difference between a second parameter value of the first parameter and a third parameter value of the first parameter, the second parameter value of the first parameter reflects downlink channel quality in a case in which the network device uses a third precoder, the third parameter value of the first parameter reflects downlink channel quality in a case in which the network device uses a fourth precoder, the fourth precoder corresponds to feedback information for second channel information, the feedback information for the second channel information is based on a measurement result of a second downlink reference signal, and the third precoder is the same as the first precoder, or the third precoder and the first precoder are generated in a same manner.

3. The method according to claim 2, wherein the method further comprises:

   receiving a first downlink transmission from the network device, wherein the first downlink transmission is a downlink transmission that is not processed by using the fourth precoder;
   receiving a second downlink transmission from the network device, wherein the second downlink transmission is a downlink transmission processed by using the fourth precoder, and a receiving moment of the first downlink transmission and a receiving moment of the second downlink transmission are earlier than a receiving moment of the first downlink reference signal;

determining the second parameter value of the first parameter based on a measurement result of the first downlink transmission and the third precoder; and

determining the third parameter value of the first parameter based on a measurement result of the second downlink transmission.

4. The method according to claim 3, wherein the first downlink transmission is the second downlink reference signal.

5. The method according to claim 4, wherein the receiving a second downlink transmission from the network device comprises:

receiving the second downlink transmission in a first time period, wherein a downlink transmission in the first time period is a downlink transmission in which the fourth precoder is used.

6. The method according to claim 2, wherein the method further comprises:

receiving a third downlink transmission from the network device, wherein the third downlink transmission is a downlink transmission that is not processed by using the fourth precoder;

receiving second indication information from the network device, wherein the second indication information indicates the fourth precoder, and a receiving moment of the third downlink transmission and a receiving moment of the second indication information are earlier than a receiving moment of the first downlink reference signal;

determining the second parameter value of the first parameter based on a measurement result of the third downlink transmission and the third precoder; and

determining the third parameter value of the first parameter based on the fourth precoder.

7. The method according to claim 1, wherein the method further comprises:

receiving third indication information from the network device, wherein the third indication information indicates the first compensation amount.

8. The method according to any one of claims 1 to 7, wherein the first parameter and the second parameter are used to determine one or more of a modulation scheme, a code rate, or coding efficiency.

9. The method according to any one of claims 1 to 8, wherein the first parameter comprises a signal to interference plus noise ratio SINR, a signal-to-noise ratio SNR, or reference signal received power RSRP, and the second parameter comprises a channel quality indicator CQI.

10. The method according to any one of claims 1 to 8, wherein the first parameter and the second parameter are a same parameter, and the first parameter comprises a CQI, an SINR, an SNR, or RSRP.

11. The method according to any one of claims 1 to 10, wherein the method further comprises:

sending fourth indication information to the network device, wherein the fourth indication information indicates at least one of the following: that the parameter value of the second parameter is obtained through the compensation, the first compensation amount, a manner of calculating the first compensation amount, or a data source on which calculation of the first compensation amount depends, and the data source comprises one or more of a precoder, a downlink channel, or a downlink reference signal that is indicated.

12. The method according to any one of claims 1 to 10, wherein before the compensating for the first parameter value of the first parameter based on a first compensation amount, the method further comprises:

receiving fifth indication information from the network device, wherein the fifth indication information indicates at least one of the following: that a terminal device is to perform the compensation, a manner of calculating the first compensation amount, or a data source on which calculation of the first compensation amount depends, and the data source comprises one or more of a precoder, a downlink channel, or a downlink reference signal that is indicated.

13. The method according to any one of claims 1 to 12, wherein the method further comprises:

sending sixth indication information to the network device, wherein the sixth indication information indicates a capability of the terminal device to support the compensation.

14. The method according to any one of claims 1 to 13, wherein the first precoder is any precoder different from the second precoder, or the first precoder is a precoder corresponding to the first channel information.

**15.** A communication method, wherein the method comprises:

sending a first downlink reference signal to a terminal device; and
receiving first indication information from the terminal device, wherein the first indication information indicates a parameter value of a second parameter and feedback information for first channel information, the feedback information for the first channel information is based on a measurement result of the first downlink reference signal, the feedback information for the first channel information corresponds to a second precoder, the parameter value of the second parameter is obtained by compensating for a first parameter value of the first parameter based on a first compensation amount, the first parameter value of the first parameter is based on the measurement result of the first downlink reference signal and a first precoder, the first parameter reflects downlink channel quality, the first compensation amount indicates a difference between downlink channel quality in a case in which a network device uses the first precoder and downlink channel quality in a case in which the network device uses the second precoder, and the second parameter and the first parameter are a same parameter, or the second parameter is another parameter that is different from the first parameter and that reflects the downlink channel quality.

**16.** The method according to claim 15, wherein the first compensation amount is based on a difference between a second parameter value of the first parameter and a third parameter value of the first parameter, the second parameter value of the first parameter reflects downlink channel quality in a case in which the network device uses a third precoder, the third parameter value of the first parameter reflects downlink channel quality in a case in which the network device uses a fourth precoder, the fourth precoder corresponds to feedback information for second channel information, the feedback information for the second channel information is based on a measurement result of a second downlink reference signal, and the third precoder is the same as the first precoder, or the third precoder and the first precoder are generated in a same manner.

**17.** The method according to claim 16, wherein the method further comprises:

sending a first downlink transmission to the terminal device, wherein the first downlink transmission is a downlink transmission that is not processed by using the fourth precoder; and
sending a second downlink transmission to the terminal device, wherein the second downlink transmission is a downlink transmission processed by using the fourth precoder, a sending moment for the first downlink transmission and a sending moment for the second downlink transmission are earlier than a sending moment for the first downlink reference signal, the second parameter value of the first parameter is based on a measurement result of the first downlink transmission and the third precoder, and the third parameter value of the first parameter is based on a measurement result of the second downlink transmission.

**18.** The method according to claim 17, wherein the first downlink transmission is the second downlink reference signal.

**19.** The method according to claim 18, wherein the sending a second downlink transmission to the terminal device comprises:
sending the second downlink transmission to the terminal device in a first time period, wherein a downlink transmission in the first time period is a downlink transmission in which the fourth precoder is used.

**20.** The method according to claim 16, wherein the method further comprises:

sending a third downlink transmission to the terminal device, wherein the third downlink transmission is a downlink transmission that is not processed by using the fourth precoder; and
sending second indication information to the terminal device, wherein the second indication information indicates the fourth precoder, a sending moment for the third downlink transmission and a sending moment for the second indication information are earlier than a sending moment for the first downlink reference signal, the second parameter value of the first parameter is based on a measurement result of the third downlink transmission and the third precoder, and the third parameter value of the first parameter is based on the fourth precoder.

**21.** The method according to claim 15, wherein the method further comprises:
sending third indication information to the terminal device, wherein the third indication information indicates the first compensation amount.

**22.** The method according to any one of claims 15 to 21, wherein the first parameter and the second parameter are used to determine one or more of a modulation scheme, a code rate, or coding efficiency.

23. The method according to any one of claims 15 to 22, wherein the first parameter comprises a signal to interference plus noise ratio SINR, a signal-to-noise ratio SNR, or reference signal received power RSRP, and the second parameter comprises a channel quality indicator CQI.

24. The method according to any one of claims 15 to 22, wherein the first parameter and the second parameter are a same parameter, and the first parameter comprises a CQI, an SINR, an SNR, or RSRP.

25. The method according to any one of claims 15 to 24, wherein the method further comprises:
receiving fourth indication information from the terminal device, wherein the fourth indication information indicates at least one of the following: that the parameter value of the second parameter is obtained through the compensation, the first compensation amount, a manner of calculating the first compensation amount, or a data source on which calculation of the first compensation amount depends, and the data source comprises one or more of a precoder, a downlink channel, or a downlink reference signal that is indicated.

26. The method according to any one of claims 15 to 24, wherein the method further comprises:
sending fifth indication information to the terminal device, wherein the fifth indication information indicates at least one of the following:
that the terminal device is to perform the compensation, a manner of calculating the first compensation amount, or a data source on which calculation of the first compensation amount depends, wherein the data source comprises one or more of a precoder, a downlink channel, or a downlink reference signal that is indicated.

27. The method according to any one of claims 15 to 26, wherein the method further comprises:
receiving sixth indication information from the terminal device, wherein the sixth indication information indicates a capability of the terminal device to support the compensation.

28. The method according to any one of claims 15 to 27, wherein the first precoder is any precoder different from the second precoder, or the first precoder is a precoder corresponding to the first channel information.

29. A communication method, comprising:

receiving a first downlink reference signal from a network device; and
sending fourth indication information to the network device, wherein the fourth indication information indicates at least one of the following:
indicating that a parameter value of a second parameter is obtained through compensation, a first compensation amount, a manner of calculating the first compensation amount, or a data source on which calculation of the first compensation amount depends, wherein the data source comprises one or more of a precoder, a downlink channel, or a downlink reference signal that is indicated, the first compensation amount is used to compensate for a first parameter value of a first parameter to obtain the parameter value of the second parameter, the first parameter value of the first parameter is based on a measurement result of the first downlink reference signal, the first parameter reflects downlink channel quality, and the second parameter and the first parameter are a same parameter, or the second parameter is another parameter that is different from the first parameter and that reflects downlink channel quality.

30. A communication method, comprising:

sending a first downlink reference signal to a terminal device; and
receiving fourth indication information from the terminal device, wherein
the fourth indication information indicates at least one of the following:
indicating that a parameter value of a second parameter is obtained through compensation, a first compensation amount, a manner of calculating the first compensation amount, or a data source on which calculation of the first compensation amount depends, wherein the data source comprises one or more of a precoder, a downlink channel, or a downlink reference signal that is indicated, the first compensation amount is used to compensate for a first parameter value of a first parameter to obtain the parameter value of the second parameter, the first parameter value of the first parameter is based on a measurement result of the first downlink reference signal, the first parameter reflects downlink channel quality, and the second parameter and the first parameter are a same parameter, or the second parameter is another parameter that is different from the first parameter and that reflects downlink channel quality.

31. A communication method, comprising:

receiving a first downlink reference signal from a network device; and
receiving fifth indication information from the network device, wherein the fifth indication information indicates at least one of the following:
that a terminal device is to perform compensation, a manner of calculating a first compensation amount, or a data source on which calculation of the first compensation amount depends, wherein the data source comprises one or more of a precoder, a downlink channel, or a downlink reference signal that is indicated, the first compensation amount is used by the terminal device to compensate for a first parameter value of a first parameter, the first parameter reflects downlink channel quality, and the first parameter value of the first parameter is based on a measurement result of the first downlink reference signal.

32. A communication method, comprising:

sending a first downlink reference signal to a terminal device; and
sending fifth indication information to the terminal device, wherein the fifth indication information indicates at least one of the following:
that the terminal device is to perform compensation, a manner of calculating a first compensation amount, or a data source on which calculation of the first compensation amount depends, wherein the data source comprises one or more of a precoder, a downlink channel, or a downlink reference signal that is indicated, the first compensation amount is used by the terminal device to compensate for a first parameter value of a first parameter, the first parameter reflects downlink channel quality, and the first parameter value of the first parameter is based on a measurement result of the first downlink reference signal.

33. A communication method, comprising:

receiving a third downlink reference signal from a network device;
measuring the third downlink reference signal to obtain third channel information;
sending seventh indication information to the network device, wherein the seventh indication information indicates feedback information for the third channel information, and the feedback information for the third channel information is obtained by processing the third channel information by using a first artificial intelligence AI model;
receiving eighth indication information from the network device, wherein the eighth indication information indicates recovery information for the third channel information, and the recovery information for the third channel information is based on a result of processing the feedback information for the third channel information by using a second AI model; and
sending ninth indication information to the network device, wherein the ninth indication information indicates performance of the first AI model and the second AI model, and the performance is based on a difference between the third channel information and the recovery information for the third channel information.

34. The method according to claim 33, wherein the third channel information is based on a correspondence between channel information and recovery information for the channel information.

35. The method according to claim 33, wherein the method further comprises:
receiving tenth indication information from the network device, wherein the tenth indication information indicates the third channel information.

36. The method according to any one of claims 33 to 35, wherein the difference between the third channel information and the recovery information for the third channel information is represented as a similarity and/or a degree of difference between the third channel information and the recovery information for the third channel information.

37. The method according to any one of claims 33 to 36, wherein the ninth indication information indicates at least one of the following: the similarity between the recovery information for the third channel information and the third channel information, the degree of difference between the recovery information for the third channel information and the third channel information, whether the similarity between the recovery information for the third channel information and the third channel information is greater than a first threshold, or whether the degree of difference between the recovery information for the third channel information and the third channel information is greater than a second threshold.

38. A communication method, comprising:

sending a third downlink reference signal to a terminal device;
receiving seventh indication information from the terminal device, wherein the seventh indication information indicates feedback information for third channel information, the feedback information for the third channel information is based on a result of processing the third channel information by using a first AI model, and the third channel information is based on a measurement result of the third downlink reference signal;
sending eighth indication information to the terminal device, wherein the eighth indication information indicates recovery information for the third channel information, and the recovery information for the third channel information is based on a result of processing the feedback information for the third channel information by using a second AI model; and
receiving ninth indication information from the terminal device, wherein the ninth indication information indicates performance of the first AI model and the second AI model, and the performance is based on a difference between the third channel information and the recovery information for the third channel information.

39. The method according to claim 38, wherein the method further comprises:
sending tenth indication information to the terminal device, wherein the tenth indication information indicates the third channel information.

40. The method according to claim 38 or 39, wherein the difference between the third channel information and the recovery information for the third channel information is represented as a similarity and/or a degree of difference between the third channel information and the recovery information for the third channel information.

41. The method according to any one of claims 38 to 40, wherein the ninth indication information indicates at least one of the following: the similarity between the recovery information for the third channel information and the third channel information, the degree of difference between the recovery information for the third channel information and the third channel information, whether the similarity between the recovery information for the third channel information and the third channel information is greater than a first threshold, or whether the degree of difference between the recovery information for the third channel information and the third channel information is greater than a second threshold.

42. A communication apparatus, comprising a unit or a module for performing the method according to any one of claims 1 to 14, a unit or a module for performing the method according to claim 29, a unit or a module for performing the method according to claim 31, or a unit or a module for performing the method according to any one of claims 33 to 37.

43. A communication apparatus, comprising a unit or a module for performing the method according to any one of claims 15 to 28, a unit or a module for performing the method according to claim 30, a unit or a module for performing the method according to claim 32, or a unit or a module for performing the method according to any one of claims 38 to 41.

44. A computer-readable storage medium, wherein the computer-readable storage medium comprises instructions, and when the instructions are run by a processor, the method according to any one of claims 1 to 14 is implemented, the method according to any one of claims 15 to 28 is implemented, the method according to claim 29 is implemented, the method according to claim 30 is implemented, the method according to claim 31 is implemented, the method according to claim 32 is implemented, the method according to any one of claims 33 to 37 is implemented, or the method according to any one of claims 38 to 41 is implemented.

45. A communication apparatus, wherein the communication apparatus comprises a processor and a storage medium, the storage medium stores instructions, and when the instructions are run by the processor, the method according to any one of claims 1 to 14 is implemented, the method according to any one of claims 15 to 28 is implemented, the method according to claim 29 is implemented, the method according to claim 30 is implemented, the method according to claim 31 is implemented, the method according to claim 32 is implemented, the method according to any one of claims 33 to 37 is implemented, or the method according to any one of claims 38 to 41 is implemented.

46. A computer program product, wherein the computer program product comprises instructions, and when the instructions are run by a processor, the method according to any one of claims 1 to 14 is implemented, the method according to any one of claims 15 to 28 is implemented, the method according to claim 29 is implemented, the method according to claim 30 is implemented, the method according to claim 31 is implemented, the method according to claim 32 is implemented, the method according to any one of claims 33 to 37 is implemented, or the method according to any one of claims 38 to 41 is implemented.

47. A communication system, comprising the communication apparatus according to claim 42 and the communication apparatus according to claim 43.

FIG. 1

FIG. 2

Performance feedback

Data source

Training data → Model training

Model deployment/update

Model feedback

Inference data → Model inference

Output → Actor entity

FIG. 3

Terminal device

Network device

1: Send a CSI-RS

2: Determine feedback quantities such as an RI, a CQI, and a PMI based on the CSI-RS

3: Send a CSI report

4: Send a downlink transmission based on the CSI report

FIG. 4

FIG. 5

FIG. 6

700

```
┌──────────┐                                              ┌──────────┐
│ Terminal │                                              │ Network  │
│  device  │                                              │  device  │
└────┬─────┘                                              └────┬─────┘
     │         710: Send a downlink reference signal #1        │
     │◄──────────────────────────────────────────────────────│
     │                                                         │
┌────┴──────────────────────────────────────────────┐        │
│  720: Determine a parameter value #1 of a first    │        │
│  parameter based on a measurement result of the    │        │
│  downlink reference signal #1 and a precoder #1    │        │
└────┬───────────────────────────────────────────────┘        │
     │                                                         │
┌────┴──────────────────────────────────────────────┐        │
│  730: Compensate for the parameter value #1 of the first    │
│  parameter based on a first compensation amount, to         │
│  obtain a parameter value of a second parameter             │
└────┬───────────────────────────────────────────────┘        │
     │                                                         │
     │    740: Send indication information #1, indicating      │
     │       the parameter value of the second parameter       │
     │───────────────────────────────────────────────────────►│
     │                                                         │
```

FIG. 7

<u>700</u>

```
┌──────────┐                                          ┌──────────┐
│ Terminal │                                          │ Network  │
│  device  │                                          │  device  │
└────┬─────┘                                          └────┬─────┘
     │         810: Send a downlink transmission #1        │
     │◄──────────────────────────────────────────────────│
     │                                                     │
     │         820: Send a downlink transmission #2        │
     │◄──────────────────────────────────────────────────│
```

830: Determine a parameter value #3 of a first parameter based on a measurement result of the downlink transmission #1 and a precoder #3

840: Determine a parameter value #4 of the first parameter based on a measurement result of the downlink transmission #2

710: Send a downlink reference signal #1

720: Determine a parameter value #1 of the first parameter based on a measurement result of the downlink reference signal #1 and a precoder #1

730: Compensate for the parameter value #1 of the first parameter based on a first compensation amount, to obtain a parameter value of a second parameter

740: Send indication information #1, indicating the parameter value of the second parameter

FIG. 8

700

```
┌──────────┐                                              ┌──────────┐
│ Terminal │                                              │ Network  │
│  device  │                                              │  device  │
└────┬─────┘                                              └────┬─────┘
     │                                                         │
     │       910: Send a downlink transmission #3              │
     │◄────────────────────────────────────────────────────────
     │                                                         │
     │        920: Send indication information #2              │
     │◄────────────────────────────────────────────────────────
```

930: Determine a parameter value #3 of a first
parameter based on a measurement result of the
downlink transmission #3 and a precoder #3

940: Determine a parameter value #4 of the first
parameter based on the indication information #2

```
     │       710: Send a downlink reference signal #1          │
     │◄────────────────────────────────────────────────────────
```

720: Determine a parameter value #1 of the first
parameter based on a measurement result of the
downlink reference signal #1 and a precoder #1

730: Compensate for the parameter value #1 of the first
parameter based on a first compensation amount, to
obtain a parameter value of a second parameter

```
     │    740: Send indication information #1, indicating       │
     │       the parameter value of the second parameter        │
     │─────────────────────────────────────────────────────────►
```

FIG. 9

700

Terminal
device

Network
device

1010: Send indication information #3,
indicating a first compensation amount

710: Send a downlink reference signal #1

720: Determine a parameter value #1 of a first
parameter based on a measurement result of the
downlink reference signal #1 and a precoder #1

730: Compensate for the parameter value #1 of the first
parameter based on a first compensation amount, to
obtain a parameter value of a second parameter

740: Send indication information #1, indicating
the parameter value of the second parameter

FIG. 10

1100

| Terminal device | | Network device |

1110: Send a CSI-RS

1120: Determine an SINR S11 based on the CSI-RS

1130: Report a CSI report R11

1140: Send a downlink transmission X12

1150: Determine an SINR S12 based on the downlink transmission X12

1160: Send a CSI-RS

1170: Determine an SINR S13 based on the CSI-RS

1180: Determine a CQI C14 based on S11, S12, and S13

1190: Report a CSI report R12

FIG. 11

1200

FIG. 12

1300

```
┌─────────────┐                                          ┌─────────────┐
│  Terminal   │                                          │   Network   │
│   device    │                                          │   device    │
└─────────────┘                                          └─────────────┘
       │                   1310: Send a CSI-RS                   │
       │◄─────────────────────────────────────────────────────── │
       │                                                         │
┌──────────────────────────────────────────┐                     │
│ 1320: Determine an SINR S31 based on the   │                    │
│            CSI-RS                          │                    │
└──────────────────────────────────────────┘                     │
       │               1330: Report a CSI report R31             │
       │ ───────────────────────────────────────────────────────►│
       │            1340: Send indication information #31         │
       │◄─────────────────────────────────────────────────────── │
┌──────────────────────────────────────────┐                     │
│ 1350: Determine an SINR S32 based on the   │                    │
│         indication information #31         │                    │
└──────────────────────────────────────────┘                     │
       │                 1360: Send a CSI-RS                      │
       │◄─────────────────────────────────────────────────────── │
┌──────────────────────────────────────────┐                     │
│ 1370: Determine an SINR S33 based on the   │                    │
│            CSI-RS                          │                    │
└──────────────────────────────────────────┘                     │
                                                                 │
┌──────────────────────────────────────────┐                     │
│ 1380: Determine a CQI C34 based on S31,    │                    │
│           S32, and S33                     │                    │
└──────────────────────────────────────────┘                     │
       │               1390: Report a CSI report R32             │
       │ ───────────────────────────────────────────────────────►│
       │                                                         │
```

FIG. 13

1400

FIG. 14

1500

FIG. 15

1600

FIG. 16

1700

Transceiver unit 1710

Processing unit 1720

FIG. 17

1800

Processor 1810

Transceiver 1830

Memory 1820

FIG. 18

**EP 4 589 853 A1**

## INTERNATIONAL SEARCH REPORT

| | International application No. |
|---|---|
| | **PCT/CN2023/119794** |

**A. CLASSIFICATION OF SUBJECT MATTER**

H04B7/00(2006.01)i; H04W24/00(2009.01)i

According to International Patent Classification (IPC) or to both national classification and IPC

**B. FIELDS SEARCHED**

Minimum documentation searched (classification system followed by classification symbols)

IPC: H04B,H04W

Documentation searched other than minimum documentation to the extent that such documents are included in the fields searched

Electronic data base consulted during the international search (name of data base and, where practicable, search terms used)

CNTXT, CNABS, DWPI, VEN, USTXT, WOTXT, EPTXT, CJFD, 3GPP, CNKI, IEEE: 信道质量, 信道状态, 预编码, 补偿, 差异, 差别, 误差, 相似性, 相似度, 人工智能, 模型, 神经网络, 向量机, 下行参考信号, CSI, CQI, RS, precode, compensate, difference, error, AI, neural network, VM

**C. DOCUMENTS CONSIDERED TO BE RELEVANT**

| Category* | Citation of document, with indication, where appropriate, of the relevant passages | Relevant to claim No. |
|---|---|---|
| X | US 2016218782 A1 (NVIDIA CORPORATION) 28 July 2016 (2016-07-28) description, paragraphs [0012]-[0044], and figures 1-3 | 1-32, 42-47 |
| X | CN 113810086 A (HUAWEI TECHNOLOGIES CO., LTD.) 17 December 2021 (2021-12-17) description, paragraphs [0102]-[0506], and figures 1-15 | 33-47 |
| X | CN 107872260 A (HUAWEI TECHNOLOGIES CO., LTD.) 03 April 2018 (2018-04-03) description, paragraphs [0047]-[0193], and figures 1-6 | 1-32, 42-47 |
| X | CN 113765830 A (HUAWEI TECHNOLOGIES CO., LTD.) 07 December 2021 (2021-12-07) description, paragraphs [0143]-[0453], and figures 1-15 | 33-47 |
| A | CN 111342912 A (HUAWEI TECHNOLOGIES CO., LTD.) 26 June 2020 (2020-06-26) entire document | 1-47 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 October 2023** | **01 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119794**

| Patent document cited in search report | | | Publication date (day/month/year) | Patent family member(s) | | | Publication date (day/month/year) |
|---|---|---|---|---|---|---|---|
| US | 2016218782 | A1 | 28 July 2016 | US | 9887751 | B2 | 06 February 2018 |
| CN | 113810086 | A | 17 December 2021 | WO | 2021249515 | A1 | 16 December 2021 |
| CN | 107872260 | A | 03 April 2018 | EP | 3509226 | A1 | 10 July 2019 |
| | | | | EP | 3509226 | A4 | 31 July 2019 |
| | | | | EP | 3509226 | B1 | 16 December 2020 |
| | | | | US | 2019229783 | A1 | 25 July 2019 |
| | | | | US | 11088738 | B2 | 10 August 2021 |
| | | | | WO | 2018059448 | A1 | 05 April 2018 |
| CN | 113765830 | A | 07 December 2021 | CN | 113765830 | B | 27 December 2022 |
| CN | 111342912 | A | 26 June 2020 | US | 2023064117 | A1 | 02 March 2023 |
| | | | | WO | 2020125510 | A1 | 25 June 2020 |
| | | | | EP | 3883135 | A1 | 22 September 2021 |
| | | | | EP | 3883135 | A4 | 12 January 2022 |
| | | | | US | 2021320694 | A1 | 14 October 2021 |
| | | | | US | 11689256 | B2 | 27 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214373X